(19) **Europäisches Patentamt / European Patent Office / Office européen des brevets**

(11) **EP 3 191 556 B1**

(12) **EUROPEAN PATENT SPECIFICATION**

(45) Date of publication and mention of the grant of the patent:
**10.10.2018 Bulletin 2018/41**

(21) Application number: **15840106.7**

(22) Date of filing: **31.08.2015**

(51) Int Cl.:
*C09D 11/322* (2014.01)　　*B41J 2/01* (2006.01)
*B41J 2/175* (2006.01)　　*B41M 5/00* (2006.01)
*C09D 11/40* (2014.01)

(86) International application number:
**PCT/JP2015/004421**

(87) International publication number:
**WO 2016/038847 (17.03.2016 Gazette 2016/11)**

(54) **INK, INK SET, AND INKJET RECORDING DEVICE**

TINTE, TINTENSATZ UND TINTENSTRAHLAUFZEICHNUNGSVERFAHREN

ENCRE, JEU D'ENCRE ET DISPOSITIF D'IMPRESSION À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2014 JP 2014183978**

(43) Date of publication of application:
**19.07.2017 Bulletin 2017/29**

(73) Proprietor: **Ricoh Company, Ltd.**
**Tokyo 143-8555 (JP)**

(72) Inventors:
• **YOKOHAMA, Yuuki**
**Tokyo 143-8555 (JP)**
• **MAEKAWA, Tsutomu**
**Tokyo 143-8555 (JP)**
• **BANNAI, Akiko**
**Tokyo 143-8555 (JP)**
• **KOJIMA, Mariko**
**Tokyo 143-8555 (JP)**
• **GOTOU, Hiroshi**
**Tokyo 143-8555 (JP)**
• **NAKAGAWA, Tomohiro**
**Tokyo 143-8555 (JP)**

(74) Representative: **Lamb, Martin John Carstairs**
**Marks & Clerk LLP**
**90 Long Acre**
**London WC2E 9RA (GB)**

(56) References cited:
WO-A1-2014/119771　　JP-A- 2011 246 562
US-A1- 2010 075 045　　US-A1- 2010 285 287
US-A1- 2014 022 321　　US-A1- 2014 069 295

EP 3 191 556 B1

## Description

### Technical Field

The present invention relates to an ink, an ink set, and an inkjet recording device.

### Background Art

An inkjet printer using an inkjet recording system has widely and rapidly spread, as it is inexpensive, and easily achieves color printing.

Conventionally, dye inks have often used, and these inks have a problem in weather resistance. Therefore, pigment inks have recently used widely.

The pigment ink has a problem that clogging of a nozzle occurs to lower maintainability as a viscosity of the ink increases to cause aggregation within a printer, especially when the ink is dried around a head. Another problem of the pigment ink is that the pigment tends to stay on a surface of coated paper for printing, and drying performance of the ink is degraded, when the coated paper for printing, which has poor ink absorption compared to plain paper, is used.

PTL 1 discloses an inkjet recording method, which uses an inkjet ink containing an organic solvent having a boiling point of 150°C or higher, water, a pigment, and a high molecular compound, and performed recording on coated paper of printing, which is heated, using a linear inkjet heads. With regard to this inkjet ink, an amount of the organic solvent having a boiling point of 150°C or higher is 40% by mass to 70% by mass relative to a total amount of the ink, the total solid content is 8% by mass to 16% by mass relative to the total amount of the ink, and a mass ratio of the pigment to the high molecular compound is 1:1 to 1:10. Moreover, a logP value of the organic solvent having a boiling point of 150°C or higher, which is determined by the formula (A) is 0 to 1.0.

$$\text{logP} = \text{logP}_1 \cdot S_1/S + \text{logP}_2 \cdot S_2/S + \ldots + \text{logP}_n \cdot S_n/S$$
$$\text{Formula (A)}$$

In the formula (A) above, the logP value is a value when "n" types of the organic solvents each having a boiling point of 150°C or higher are used, "n" denotes a natural number, "$\text{logP}_1$" denotes a logP value of Solvent 1, "$\text{logP}_2$" denotes a logP value of Solvent 2, "$\text{logP}_n$" denotes a logP value of Solvent n, "S" denotes a total amount of the organic solvents each having a boiling point of 150°C or higher, "$S_1$" denotes an amount of Solvent 1, "$S_2$" denotes an amount of Solvent 2, and "$S_n$" denotes an amount of Solvent n.

However, this ink has a problem that stability thereof over time is insufficient.

### Citation List

### Patent Literature

PTL 1: Japanese Patent Application Laid-Open (JP-A) No. 2010-42544

### Summary of Invention

### Technical Problem

The present invention aims to provide an ink, which is excellent in stability over time, excellent maintainability and excellent drying performance to coated paper for printing.

### Solution to Problem

One embodiment of the present invention is an ink, which contains:

water;
a pigment; and
a first water-soluble organic solvent,
wherein the first water-soluble organic solvent contains a water-soluble organic solvent (G) having a boiling point of 280°C to 300°C, a water-soluble organic solvent (X) having a boiling point of 180°C to 190°C, and a water-soluble organic solvent (Y) having a boiling point of 190°C to 200°C,

wherein the ink satisfies the following formulae:

$$24 \leqq X \leqq 40$$

$$2 \leqq X/Y \leqq 20$$

where X [% by mass] is an amount of the water-soluble organic solvent (X), and Y [% by mass] is an amount of the water-soluble organic solvent (Y).

**Advantageous Effects of Invention**

The present invention can provide an ink, which is excellent in stability over time, excellent maintainability and excellent drying performance to coated paper for printing.

**Brief Description of Drawings**

[fig.1]Fig. 1 is a schematic diagram illustrating one example of an inkjet recording device.
[fig.2]Fig. 2 is a schematic diagram illustrating one example of a pretreatment liquid coating device in a pretreatment unit of Fig. 1.
[fig.3]Fig. 3 is a schematic diagram illustrating an ink ejection unit of Fig. 1.
[fig.4]Fig. 4 is a schematic diagram illustrating an inkjet head unit of Fig. 3.

**Description of Embodiments**

Embodiments for carrying out the present invention are explained with reference to drawings, hereinafter.

(Ink)

The ink of the present invention contains water, a pigment, and a first water-soluble organic solvent, and may further contain other components, as necessary.
The first water-soluble organic solvent contains a water-soluble organic solvent (G) having a boiling point of 280°C to 300°C, a water-soluble organic solvent (X) having a boiling point of 180°C to 190°C, and a water-soluble organic solvent (Y) having a boiling point of 190°C to 200°C.
The ink satisfies the following formulae:

$$24 \leqq X \leqq 40$$

$$2 \leqq X/Y \leqq 20,$$

and preferably satisfies the following formulae:

$$26 \leqq X \leqq 36$$

$$5 \leqq X/Y \leqq 10$$

where X [% by mass] is an amount of the water-soluble organic solvent (X) in the ink, and Y [% by mass] is an amount of the water-soluble organic solvent (Y) in the ink. When the amount X is less than 24% by mass, a viscosity of the ink tends to increase to thereby impair stability of the ink over time and maintainability of the ink. When the amount X is greater than 40% by mass, drying performance of the ink on coated paper for printing is poor. When the ratio X/Y is less than 2, stability of the ink over time is poor, as dispersion stability of the pigment in the ink is impaired. When the ratio X/Y is greater than 20, drying performance of the ink on coated paper for printing is poor.

In the related art, it has been difficult to realize stability of an aqueous ink over time, maintainability and drying performance of the ink on coated paper for printing, all at once. In order to improve maintainability the aqueous ink needs to be hard to dry. If a water-soluble organic solvent having a high boiling point is used to this end, however, drying performance of the ink on coated paper for printing becomes poor. If a water-soluble organic solvent having a low boiling point is used to improve drying performance of an ink on coated paper for printing, on the other hand, the aqueous ink tends to be dried, to impair maintainability.

Therefore, stability of an ink over time, maintainability and drying performance of the ink on coated paper for printing can be realized by using the water-soluble organic solvent (G), the water-soluble organic solvent (X), the water-soluble organic solvent (Y) in combination as the first water-soluble organic solvent.

Since the boiling points of the water-soluble organic solvent (X) and the water-soluble organic solvent (Y) are 200°C or lower, drying performance of the ink can be improved on coated paper for printing.

Since the boiling point of the water-soluble organic solvent (G) is 280°C or higher, moreover, maintainability of the ink can be improved.

The ink preferably satisfies the following formula:

$$2 \leqq G \leqq 6$$

where G [% by mass] is an amount of the water-soluble organic solvent (G) in the ink. As the amount G is 2% by mass or greater, the maintainability of the ink is further improved. As the amount G is 6% by mass or less, the drying performance of the ink is further improved.

The ink more preferably satisfies the following formula:

$$2 \leq Y \leq 10.$$

As the amount Y is 2% by mass or greater, image density of an image formed with the ink on plain paper can be improved. As the amount Y is 10% by mass or less, the stability of the ink over time can be further improved.

The ink more preferably satisfies the following formula:

$$30 \leq X+Y \leq 42.$$

As the amount X+Y is 30% by mass or greater, the maintainability can be further improved. As the amount X+Y is 42% by mass or less, the drying performance can be further improved.

The water-soluble organic solvent (X) is not particularly limited, and example thereof include: aliphatic diol, such as 2,3-butanediol (boiling point: 182°C), and propylene glycol (boiling point: 188°C); and alkyl ether of aliphatic diol, such as diethylene glycol diethyl ether (boiling point: 189°C). These may be used in combination.

The water-soluble organic solvent (Y) is not particularly limited, and examples thereof include: aliphatic diol, such as 1,2-butanediol (boiling point: 193°C), and 2-methyl-2,4-pentanediol (boiling point: 198°C); and alkyl ether of aliphatic diol, such as diethylene glycol monomethyl ether (boiling point: 194°C). These may be used in combination.

The water-soluble organic solvent (G) is not particularly limited, and examples thereof include aliphatic triol, such as glycerin (boiling point: 290°C). Two or more aliphatic triols may be used in combination as the water-soluble organic solvent (G).

The ink may further contain a surfactant, as necessary. Use of the surfactant in the ink can adjust surface tension of the ink.

Examples of the surfactant include a nonionic surfactant, an anionic surfactant, a betaine surfactant, a silicone-based surfactant, and a fluorine-based surfactant. These may be used in combination. Among them, the silicone-based surfactant and the fluorine-based surfactant are preferable.

A number of carbon atoms in the fluorine-based surfactant is typically 2 to 16, preferably 4 to 16.

The fluorine-based surfactant is not particularly limited, and examples thereof include a perfluoroalkyl sulfonic acid compound, a perfluoroalkyl carboxylic acid compound, a perfluoroalkyl phosphate compound, a perfluoroalkyl ethylene oxide adduct, and a polyoxyalkylene ether polymer compound containing a perfluoroalkyl ether group at a side chain thereof. Among them, the polyoxyalkylene ether polymer compound containing a perfluoroalkyl ether group at a side chain thereof is preferable, as it has less foamability.

Examples of the perfluoroalkyl sulfonic acid compound include perfluoroalkyl sulfonic acid, and perfluoroalkyl sulfonic acid salt.

Examples of the perfluoroalkyl carboxylic acid compound include perfluoroalkyl carboxylic acid, and perfluoroalkyl carboxylic acid salt.

Examples of the perfluoroalkyl phosphate include perfluoroalkyl phosphate, and a salt of perfluoroalkyl phosphate.

Examples of the polyoxyalkylene ether polymer compound containing a perfluoroalkyl ether group at a side chain thereof include a polyoxyalkylene ether polymer containing a perfluoroalkyl ether group in a side chain thereof, a salt of sulfate of a polyoxyalkylene ether polymer containing a perfluoroalkyl ether group in a side chain thereof, and a salt of a polyoxyalkylene ether polymer having a perfluoroalkyl ether group in a side chain thereof.

A counter ion of the salt in the fluorine-based surfactant is not particularly limited, and examples thereof include Li+, Na+, $K^+$, $^+NH_4$, $^+NH_3CH_2CH_2OH$, $^+NH_2(CH_2CH_2OH)_2$, and $^+NH(CH_2CH_2OH)_3$.

Examples of a commercial product of the fluorine-based surfactant include: SURFLON S-111, S-112, S-113, S-121, S-131, S-132, S-141, S-145 (all manufactured by ASAHI GLASS CO., LTD.); FLUORAD FC-93, FC-95, FC-98, FC-129, FC-135, FC-170C, FC-430, FC-431 (all manufactured by Sumitomo 3M Limited); MEGAFACE F-470, F-1405, F-474 (all manufactured by DIC CORPORATION); Zonyl TBS, FSP, FSA, FSN-100, FSN, FSO-100, FSO, FS-300, UR (all manufactured by Du Pont Kabushiki Kaisha); FT-110, FT-250, FT-251, FT-400S, FT-150, FT-400SW (all manufactured by NEOS COMPANY LIMITED); and PolyFox PF-136A,PF-156A, PF-151N, PF-154, PF-159 (all manufactured by Omnova Solutions, Inc.).

The silicone-based surfactant is not particularly limited, and examples thereof include side chain-modified polydimethylsiloxane, both terminal-modified polydimethylsiloxane, one terminal-modified polydimethylsiloxane, and side chain and both terminals-modified polydimethylsiloxane. Among them, particularly preferred is a polyether-modified silicone-based surfactant containing a polyoxyethylene group and polyoxyethylene polyoxypropylene group, as modified groups.

Examples of a commercial product of the polyether-modified silicone-based surfactant include: KF-618, KF-642, KF-643 (all manufactured by Shin-Etsu Chemical Co., Ltd.); EMALEX-SS-5602, SS-1906EX (both manufactured by Nihon Emulsion Co., Ltd.); FZ-2105, FZ-2118, FZ-2154, FZ-2161, FZ-2162, FZ-2163, FZ-2164 (all manufactured by Dow Corning Toray Co., Ltd.); and BYK-33, BYK-387 (both manufactured by BYK Japan K.K..

The anionic surfactant is not particularly limited, and examples thereof include an acetic acid salt of polyoxyethylene alkyl ether, dodecylbenzene sulfonic acid salt, lauric acid salt, and polyoxyethylene alkyl ether sulfate salt.

The nonionic surfactant is not particularly limited, and examples thereof include polyoxyethylene alkyl ether, polyoxypropylenepolyoxyethylenealkyl ether, polyoxyethylenealkyl ester, polyoxyethylene sorbitan fatty acid ester, polyoxyethylene alkylphenyl ether, polyoxyethylene alkylamine, and polyoxyethylene alkylamide.

A commercial product of the nonionic surfactant for use is not particularly limited, and examples thereof include SOFTANOL EP5035, SOFTANOL EP7045, SOFTANOL EP7025 (all manufactured by NIPPON SHOKUBAI CO., LTD.).

An amount of the surfactant in the ink is typically 0.001% by mass to 5% by mass, and preferably 0.05% by mass to 1% by mass.

The ink preferably further contains C8-C11 aliphatic diol and/or C7-C14 aliphatic diol ether, as a penetrating agent.

The C8-C11 aliphatic diol is not particularly limited, and examples thereof include 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, and 5-hexene-1,2-diol. Among them, 2-ethyl-1,3-hexanediol and 2,2,4-trimethyl-1,3-pentanediol are preferable.

The C7-C14 aliphatic diol ether is not particularly limited, and examples thereof include diethylene glycol monophenyl ether, ethylene glycol monophenyl ether, diethylene glycol monobutyl ether, propylene glycol monobutyl ether, and tetraethylene glycol chlorophenyl ether.

An amount of the C8-C11 aliphatic diol and/or the C7-C14 aliphatic diol ether in the ink is typically 0.1% by mass to 5.0% by mass.

The pigment may be an inorganic pigment or an organic pigment.

The inorganic pigment is not particularly limited, and examples thereof include titanium oxide, iron oxide, calcium carbonate, barium sulfate, aluminium hydroxide, barium yellow, cadmium red, chrome yellow, and carbon black. Among them, carbon black is preferable.

The organic pigment is not particularly limited, and examples thereof include an azo pigment, a polycyclic pigment, a dye chelate, a nitro pigment, a nitrosopigment, and aniline black. Among them, the azo pigment, and the polycyclic pigment are preferable.

Examples of the azo pigment include azo lake, an insoluble azo pigment, a condensed azo pigment, and a chelate azo pigment.

Examples of the polycyclic pigment include a phthalocyanine pigment, a perylene pigment, a perynone pigment, an anthraquinone pigment, a quinacridone pigment, a dioxazine pigment, an indigo pigment, a thioindigo pigment, an isoindolinone pigment, and a quinophthalone pigment.

Examples of the dye chelate include a basic dye chelate, and an acidic dye chelate.

Examples of the pigment for a black ink include: carbon black (C.I. Pigment Black 7), such as furnace black, lamp black, acetylene black, and channel black; metals such as copper, iron (C.I. Pigment Black 11), and titanium oxide; and an organic pigment, such as aniline black (C.I. Pigment Black 1).

A production method of the carbon black is not particularly limited, and examples thereof include a contact method, a furnace method, a channel method, and a thermal method.

The average primary particle diameter of the carbon black is typically 15 nm to 40 nm.

The BET specific surface area of the carbon black is typically 50 $m^2$/g to 300 $m^2$/g.

The DBP oil absorption of the carbon black is typically 40 mL/100g to 150 mL/100g.

The volatile matter content of the carbon black is typically 0.5% to 10%.

The pH of the carbon black is typically 2 to 9.

Example of a commercial product of the carbon black include: No. 2300, No. 900, MCF-88, No. 33, No. 40, No. 45, No. 52, MA7, MA8, MA100, No. 2200B (all manufactured by Mitsubishi Chemical Corporation); Raven 700, 5750, 5250, 5000, 3500, 1255 (all manufactured by Birla Carbon); Regal 400R, 330R, 660R, Mogul L, Monarch 700, 800, 880, 900, 1000, 1100, 1300, Monarch 1400 (all manufactured by Cabot Corporation); and Color Black FW1, FW2, FW2V, FW18, FW200, S150, S160, S170, PRINTEX 35, U, V, 140U, 140V, Special Black 6, 5, 4A, 4 (all manufactured by EVONIK INDUSTRIES).

Examples of the pigment for a yellow ink include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14, C.I. Pigment Yellow 16, C.I. Pigment Yellow 17, C.I. Pigment Yellow 53, C.I. Pigment Yellow 55, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 114, C.I. Pigment Yellow 120, C.I. Pigment Yellow 128, C.I. Pigment Yellow 129, C.I. Pigment Yellow 138, C.I. Pigment Yellow 150, C.I. Pigment Yellow 151, C.I. Pigment Yellow 153, C.I. Pigment Yellow 154, C.I. Pigment Yellow 155, C.I. Pigment Yellow 174, and C.I. Pigment Yellow 180. Among them, C.I. Pigment Yellow 74 is preferable, in view of color tone, and lightfastness thereof.

Examples of the pigment for a magenta ink include C.I. Pigment Red 5, C.I. Pigment Red 7, C.I. Pigment Red 12, C.I. Pigment Red 48(Ca), C.I. Pigment Red 48(Mn), C.I. Pigment Red 48:2, C.I. Pigment Red 48:3, C.I. Pigment Red 48:4, C.I. Pigment Red 49:1, C.I. Pigment Red 53:1, C.I. Pigment Red 57(Ca), C.I. Pigment Red 57:1, C.I. Pigment Red 112, C.I. Pigment Red 122, C.I. Pigment Red 123, C.I. Pigment Red 146, C.I. Pigment Red 168, C.I. Pigment Red 176, C.I. Pigment Red 184, C.I. Pigment Red 185, C.I. Pigment Red 202, and Pigment Violet 19. Among them, C.I. Pigment Red 122, and C.I. Pigment Violet 19 are preferable, in view of color tone, and lightfastness thereof..

Examples of the pigment for a cyan ink include C.I. Pigment Blue 1, C.I. Pigment Blue 2, C.I. Pigment Blue 3, C.I. Pigment Blue 15, C.I. Pigment Blue 15:1, C.I. Pigment Blue 15:3, C.I. Pigment Blue 15:4, C.I. Pigment Blue 15:34, C.I. Pigment Blue 16, C.I. Pigment Blue 22, C.I. Pigment Blue 60, C.I. Pigment Blue 63, C.I. Pigment Blue 66, C.I. Vat Blue 4, and C.I. Vat Blue 60. Among them, C.I. Pigment Blue 15 is preferable, in view of color tone, and lightfastness thereof.

An amount of the pigment in the ink is typically 0.1% by mass to 50% by mass, preferably 0.1% by mass to 20% by mass.

The median diameter (D50) of the pigment is typically 150 nm or smaller, preferably 100 nm or smaller.

The ink is preferably free from a water-dispersible resin. As no water-dispersible resin is contained in the ink, aggregation of the pigment, which is caused by an increase in the viscosity of the ink, can be prevented, to thereby further improve maintainability of the ink.

In the case where the ink contains the water-dispersible resin, an acryl-silicone resin emulsion, or a urethane resin emulsion may be used as a dispersion liquid of the water-dispersible resin.

The ink may further contain an antifoaming agent, a pH regulator, an antifungal agent, an anti-rust agent, antioxidant, a UV absorber, an oxygen absorber, and a photostabilizer.

The antifoaming agent is not particularly limited, and examples thereof include a silicone-based antifoaming agent, a polyether-based antifoaming agent, and a fatty acid ester-based antifoaming agent. These may be used in combination. Among them, the silicone-based antifoaming agent is preferable, as it has an excellent defoaming effect.

The antifungal agent is not particularly limited, and examples thereof include 1,2-benzisothiazolin-3-one, sodium dehydroacetate, sodium sorbate, sodium 2-pyridinethiol-1-oxide, sodium benzoate, and sodium pentachlorophenol.

The pH regulator is not particularly limited, and examples thereof include: amine, such as diethanol amine, and triethanol amine; hydroxide of an alkali metal element, such as lithium hydroxide, sodium hydroxide, and potassium hydroxide; hydroxide, such as ammonium hydroxide, quaternary ammonium hydroxide, and quaternary phosphonium hydroxide; and carbonate of alkali metal, such as lithium carbonate, sodium carbonate, and potassium carbonate.

The anti-rust agent is not particularly limited, and examples thereof include acidic sulfite, sodium thiosulfate, ammonium thioglycolate, diisopropyl ammonium nitrite, pentaerythritol tetranitrate, dicyclohexyl ammonium nitrite.

The antioxidant is not particularly limited, and examples thereof include a phenol-based antioxidant (including a hindered phenol-based antioxidant), an amine-based antioxidant, a sulfur-based antioxidant, and a phosphor-based antioxidant.

Note that, the ink may be used as an ink cartridge by housing the ink in a conventional container.

(Ink Set)

The ink set of the present invention contains a black ink, a cyan ink, a magenta ink, and a yellow ink, and the black ink, the cyan ink, the magenta ink, or the yellow ink, or any combination thereof is the aforementioned ink.

In the case where the cyan ink or the yellow ink is the aforementioned ink, it is preferred that the black ink be the below-mentioned ink, and/or the magenta ink be the below-mentioned ink. Use of these specific inks can prevent occurrences of blurring in a resulting image.

<Black Ink>

The black ink contains water, a pigment, and a second water-soluble organic solvent.

The second water-soluble organic solvent contains the water-soluble organic solvent (G) that is identical to the one used in the aforementioned ink, the water-soluble organic solvent (X) that is identical to the one used in the aforementioned ink, and the water-soluble organic solvent (Y) that is identical to the one used in the aforementioned ink.

An amount X' of the water-soluble organic solvent (X) in the black ink is 20% by mass or greater, but less than 24% by mass, and a ratio X'/Y' of the amount X' to an amount Y' of the water-soluble organic solvent (Y) in the black ink is 2 to 20.

The pigment is not particularly limited as long as it is a pigment for the black ink. The pigment is preferably carbon black.

Similarly to the aforementioned ink, the black ink may further contain a surfactant, a penetrating agent, a water-dispersible resin, an antifoaming agent, a pH regulator, an antiseptic- antifungal agent, an anti-rust agent, an antioxidant, a UV absorber, an oxygen absorber, a photostabilizer, and a fungicide.

<Magenta Ink>

The magenta ink contains water, a pigment, and a third water-soluble organic solvent.

The third water-soluble organic solvent contains the water-soluble organic solvent (G) that is identical to the one used in the aforementioned ink, and the water-soluble organic solvent (X) that is identical to the one used in the aforementioned ink, but is free from the water-soluble organic solvent (Y) that is identical to the one used in the aforementioned ink.

An amount X" of the water-soluble organic solvent (X) in the magenta ink is 24% by mass to 40% by mass.

The pigment is not particularly limited as long as it is a pigment for the magenta ink. The pigment is preferably at least one selected from the group consisting of C.I. Pigment Red 48:2, C.I. Pigment Red 48:3, C.I. Pigment Red 48:4, C.I. Pigment Red 49:1, C.I. Pigment Red 53:1, C.I. Pigment Red 57:1, C.I. Pigment Red 122, C.I. Pigment Red 146, and C.I. Pigment Violet 19.

Similarly to the aforementioned ink, the magenta ink may further contain a surfactant, a penetrating agent, a water-dispersible resin, an antifoaming agent, a pH regulator, an antiseptic- antifungal agent, an anti-rust agent, an antioxidant, a UV absorber, an oxygen absorber, a photostabilizer, and a fungicide.

<Recording Medium>

The recording medium, on which the ink is ejected to form an ink image, is not particularly limited, and examples thereof include plain paper, gloss paper, special paper, cloth, a film, an OHP sheet, and general-purpose printing paper. Among them, coated paper for printing is preferable.

Examples of a commercial product of the coated paper for printing include: OK Top Coat, OK Astro Gloss, OK Non-wrinkle, SA Kanefuji+, OK Kanefuji+, OK Non-wrinkle, (F)MCOP, OK Astro Dull, OK Astro Matte, OK Ultra Aqua Satin, OK Emboss Matte Finish, OK Emboss Satin Finish, OK Emboss Grain, OK Emboss Home Span, OK Opt Gloss, OK Kasao, OK Casablanca, OK Casablanca-V, OK Casablanca-X, OK Kanefuji single side, OK Coat L, OK Coat L Green 100, OK Coat N Green 100, OK Coat V, OK medium-quality coat (for offset), OK Top Coat S, OK Top Coat Dull, OK Top Coat Matte N, OK Trinity, OK Trinity NaVi, OK Trinity NaVi-V, OK Neo Top Coat, OK Neo Top Coat Matte , OK Non-wrinkle AL, OK Non-wrinkle DL, OK Non-wrinkle BL, OK White L, OK Matte Coat L Green 100, OK Matte Coat Green 100, OK Royal Coat, OK White L, Zcoat, Zcoat Green 100, Ultra Satin Kanefuji N, Golden Matte, Satin Kanefuji N, New Age, New Age Green 100, Mirror Coat Gold, Mirror Coat Platinum, Royal Coat L, LOSTON Color, POD Super Gloss, POD Gloss Coat, and POD Matte Coat (all manufactured by Oji Paper Co., Ltd.); Brode Matte A, Brode Gloss A, White Peal Coat N, New V Matte, Peal Coat, Dignity, Vista Gloss, N Peal Coat L, Utrillo, EP-D Gloss, EP-L Gloss, EP-L Matte, EP-D Premium White, and EP-Super High Quality (all manufactured by Mitsubishi Paper Mills Limited; Hi-a, α Mat, Kinmari Hi-L, Mu Coat, Mu Mat, and Mu White (all manufactured by Hokuetsu Paper Mill Co., Ltd.); and LumiArt (manufactured by Stora Enso).

<Inkjet Recording Device>

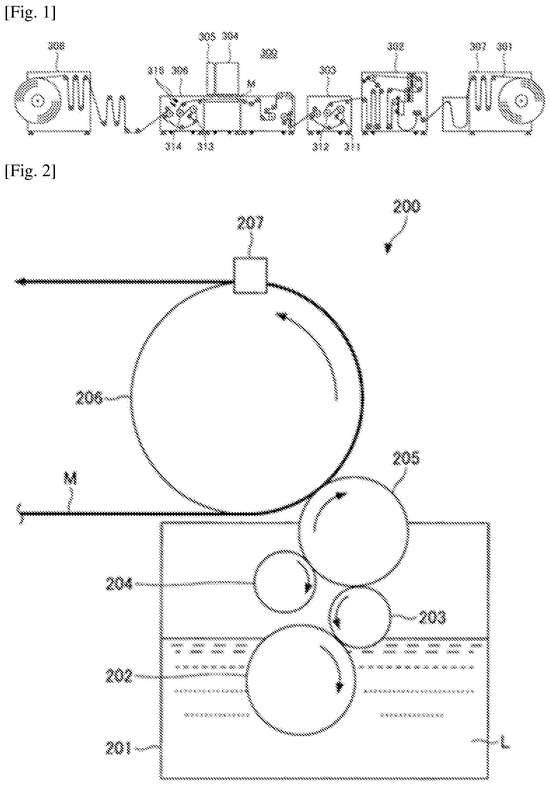

One example of the inkjet recording device is illustrated in Fig. 1.

The inkjet recording device 300 contains a recording medium conveying unit 301 configured to convey a recording medium M, a pretreatment unit 302 configured to apply a pretreatment liquid onto the recording medium M, and a first drying unit 303 configured to dry the recording medium M, to which the pretreatment liquid has been applied. Moreover, the inkjet recording device 300 contains an ink ejection unit 304 configured to eject an ink onto the dried recording medium M according to image data, to thereby form an image, a post-treatment unit 305 configured to apply a post-treatment liquid onto the recording medium M, on which the ink image has been formed, and a second drying unit 306 configured to dry the recording medium M, to which the post-treatment liquid has been applied.

The recording medium conveying unit 301 contains a paper feeding device 307, a plurality of conveyance rollers, and a winding device 308. The recording medium M is continuous paper (roll paper) wound in the form of a roll. After being pulled from the paper feeding device 307 with the conveyance rollers, the recording medium M is transported, and is wound by the winding device 308.

The pretreatment liquid is not particularly limited, as long as it is capable of aggregating the ink.

As one example of the pretreatment liquid coating device in the pretreatment unit 302, the embodiment of the device using the roll coating method is illustrated in Fig. 2.

The pretreatment liquid coating device 200 contains a reserving container 201, in which the pretreatment liquid L is reserved. A thin film of the pretreatment liquid L is formed on a surface of a coating roller 205 by a stirring-supplying roller 202, a conveying roller 203, and a thinning roller 204. The coating roller 205 is rotated with being pressed by a rotating counter roller 206. By passing the recording medium M between the coating roller 205 and the counter roller 206, the pretreatment liquid L is applied onto a surface of the recording medium M. During this process, nip pressure between the counter roller 206 and the coating roller 205 can be adjusted by a pressure adjusting device 207, and a coating amount of the pretreatment liquid L can be controlled by adjusting the nip pressure. Moreover, the coating amount of the pretreatment liquid L can be also controlled by adjusting the rotational speed of the coating roller 205 and the counter roller 206. The coating roller 205 and the counter roller 206 are driven by a power source (not illustrated), such as a driving motor. The rotational speed of the coating roller 205 and the counter roller 206 can be controlled by adjusting the energy of the power source.

A coating method of the pretreatment liquid L in the pretreatment unit 302 is not particularly limited to the roll coating, and examples thereof include blade coating, gravure coating, gravure offset coating, bar coating, and inkjet coating.

Note that, the pretreatment liquid L may be applied to only a region where an image is formed in a recording region of the recording medium M.

The first drying unit 303 contains heat rollers 311, 312, as a heating unit. The recording medium M, to which the pretreatment liquid L has been applied, is dried by direct contact heat transfer from the heat rollers 311, 312, as water is evaporated therefrom.

The surface temperature of the heat rollers 311, 312 is typically 50°C to 100°C.

The heating unit in the first drying unit 303 is not limited to the heat rollers, and examples thereof include an IR ray drying device, a microwave drying device, and a hot-air generation device. These may be used in combination.

Note that, the recording medium M may be heated before applying the pretreatment liquid L.

Moreover, the pretreatment unit 302 and the first drying unit 303 may be omitted.

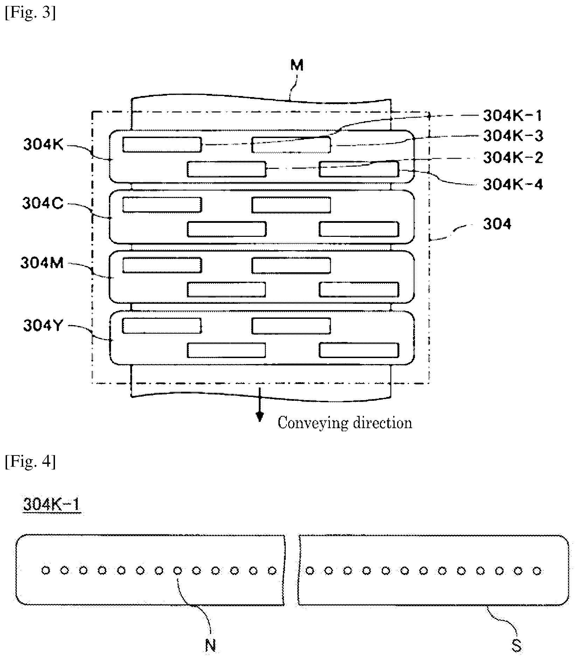

The ink ejection unit 304 is illustrated in Fig. 3.

The ink ejection unit 304 full-line-type inkjet heads. Four inkjet heads 304K, 304C, 304M, 304Y corresponding to black (K), cyan(C), magenta (M), yellow (Y) are arranged from the upper stream side along the conveying direction of the recording medium M. The inkjet head 304K of black (K) secures a width of a recording region with four inkjet head units 304K-1, 304K-2, 304K-3, 304K-4 arranged in a zigzag pattern in the direction crossing the conveying direction of the recording medium M.

The inkjet head unit 304K-1 is illustrated in Fig. 4.

In the inkjet head unit 304K-1, a nozzle array, in which many nozzles N are aligned along a length direction, is formed on a nozzle surface S.

Note that, a plurality of nozzle arrays may be formed.

Moreover, each of the inkjet heads 304C, 304M, 304Y has the same structure to that of the inkjet head 304K, and the four inkjet heads 304K, 304C, 304M, 304Y are aligned along the conveying direction with even pitch. This configuration of the inkjet heads realizes formation of an ink image over the entire width of a recording region with only one recording operation.

In the inkjet ejection unit 304, moreover, an inkjet heat of a color, other than black (K), cyan(C), magenta (M), yellow (Y), such as light cyan, may be provided.

The post-treatment liquid is not particularly limited, as long as it is capable of forming a transparent protective layer.

Note that, the post-treatment liquid may be applied on an entire recording region of the recording medium M, or may be applied only on the region where an ink image has been formed.

The coating method of the post-treatment liquid is not particularly limited, and example thereof include roll coating, blade coating, gravure coating, gravure offset coating, bar coating, and inkjet coating.

Note that, the post-treatment unit 305 may be omitted.

The second drying unit 306 contains heat rollers 313, 314 as a first heating unit, and a hot-air generation device 315 as a second heating unit. As well as evaporating water, the viscosity of the ink is reduced on the recording medium M, to which the post-treatment liquid has been applied, by contact heat transfer from the heat rollers heat rollers 313, 314. As a result, the component having a high boiling point contained in the first water-soluble organic solvent penetrates into the recording medium M. Moreover, the component having a low boiling point contained in the first organic solvent is evaporated by hot air blown onto the recording medium M, to which the post-treatment liquid has been applied. As a result, anti-blocking of the ink can be improved and fixing ability can be improved without smearing.

In the second drying unit 306, the recording medium M, to which the post-treatment liquid has been applied, is heated in order of by the hot-air generation device 315, and by the heat rollers 313, 314, but the order for performing heating by the first heating unit and the second heating unit is not particularly limited.

The surface temperature of the heat rollers 313, 314 is typically 80°C to 140°C, preferably 90°C to 130°C, and more preferably 100°C to 120°C. As the surface temperature of the heat rollers 313, 314 is 80°C or higher, anti-blocking of the ink, and fixing ability without smearing can be improved. As the surface of the temperature of the heat rollers 313, 314 is 140°C or lower, electricity consumption of the device, and the influence of the heat to the printing environment can be reduced.

The first heating unit in the second drying unit 306 is not limited to the heat rollers, and examples thereof include an IR ray drying device, and a microwave drying device. These may be used in combination.

The temperature of the hot air generated by the hot-air generation device 315 is typically 80°C to 130°C, preferably 90°C to 120°C, and more preferably 90°C to 110°C. As the temperature of the hot air is 80°C or higher, anti-blocking can be further improved, as well as further improving fixing ability without causing smearing. As the temperature thereof is 130°C or lower, an influence of the heat to the recording medium M and the ink can be reduced.

Note that, the temperature of the hot air can be measured by providing a temperature sensor at the air outlet of the hot-air generation device 315.

**Examples**

The present invention is more specifically explained through examples and comparative examples thereof, hereinafter. However, the following examples shall not be construed as to limit the scope of the present invention in any way. Note that, "part(s)" described below denotes "part(s) by mass" unless otherwise stated.

<Preparation of Cyan Pigment Dispersion Liquid 1>

After sufficiently purging a 1L flask equipped with a mechanical stirrer, a thermometer, a nitrogen inlet tube, a reflux condenser, and a dropping funnel with nitrogen gas, 11.2 g of styrene, 2.8 g of acrylic acid, 12.0 g of lauryl methacrylate, 4.0 g of polyethylene glycol methacrylate, 4.0 g of styrene macromer, and 0.4 g of mercaptoethanol were blended in the flask, and the temperature was elevated to 65°C. Subsequently, a mixed solution containing 100.8 g of styrene, 25.2 g of acrylic acid, 108.0 g of lauryl methacrylate, 36.0 g of polyethylene glycol methacrylate, 60.0 g of hydroxyl ethyl methacrylate, 36.0 g of styrene macromer, 3.6 g of mercaptoethanol, 2.4 g of azobismethyl valeronitrile, and 18 g of methyl ethyl ketone was added to the flask dropwise over 2.5 hours. Thereafter, a mixed solution containing 0.8 g of azobismethyl valeronitrile and 18 g of methyl ethyl ketone was added to the flask dropwise over 0.5 hours, followed by maturing the mixture for 1 hour at 65°C. Moreover, 0.8 g of azobismethyl valeronitrile was further added, followed by maturing the mixture for 1 hour. Thereafter, 364 g of methyl ethyl ketone was added to the flask, to thereby yield 800 g of a 50% by mass polymer solution.

After sufficiently stirring 28 g of the polymer solution, 42 g of a cyan pigment (C.I. Pigment Blue 15), 13.6 g of a 1 mol/L potassium hydroxide aqueous solution, 20 g of methyl ethyl ketone, and 13.6 g of ion-exchanged water, the resultant was kneaded by means of a roll mill, to thereby obtain a paste. Subsequently, 200 g of pure water was added to the past, and the resulting mixture was sufficiently stirred. Thereafter, the methyl ethyl ketone and water therein were evaporated by means of an evaporator. The resultant was then filtered with a polyvinylidene fluoride membrane filter having the average pore diameter of 5.0 $\mu$m under the pressure, to thereby obtain Cyan Pigment Dispersion Liquid 1 having the pigment content of 15% by mass, and the solid content of 20% by mass.

<Preparation of Cyan Pigment Dispersion Liquid 2>

Cyan Pigment Dispersion Liquid 2 was obtained in the same manner as Cyan Pigment Dispersion Liquid 1, provided that C.I. Pigment Blue 15:1 was used as the cyan pigment.

<Preparation of Cyan Pigment Dispersion Liquid 3>

Cyan Pigment Dispersion Liquid 3 was obtained in the same manner as Cyan Pigment Dispersion Liquid 1, provided that C.I. Pigment Blue 15:3 was used as the cyan pigment.

<Preparation of Cyan Pigment Dispersion Liquid 4>

Cyan Pigment Dispersion Liquid 4 was obtained in the same manner as Cyan Pigment Dispersion Liquid 1, provided that C.I. Pigment Blue 15:4 was used as the cyan pigment.

<Preparation of Yellow Pigment Dispersion Liquid 1>

Yellow Pigment Dispersion Liquid 1 was obtained in the same manner as Cyan Pigment Dispersion Liquid 1, provided that the cyan pigment was replaced with a yellow pigment (C.I. Pigment Yellow 3).

<Preparation of Yellow Pigment Dispersion Liquid 2>

Yellow Pigment Dispersion Liquid 2 was obtained in the same manner as Yellow Pigment Dispersion Liquid 1, provided that C.I. Pigment Yellow 12 was used as the yellow pigment.

<Preparation of Yellow Pigment Dispersion Liquid 3>

Yellow Pigment Dispersion Liquid 3 was obtained in the same manner as Yellow Pigment Dispersion Liquid 1, provided that C.I. Pigment Yellow 13 was used as the yellow pigment.

<Preparation of Yellow Pigment Dispersion Liquid 4>

Yellow Pigment Dispersion Liquid 4 was obtained in the same manner as Yellow Pigment Dispersion Liquid 1, provided that C.I. Pigment Yellow 14 was used as the yellow pigment.

<Preparation of Yellow Pigment Dispersion Liquid 5>

Yellow Pigment Dispersion Liquid 5 was obtained in the same manner as Yellow Pigment Dispersion Liquid 1, provided that C.I. Pigment Yellow 17 was used as the yellow pigment.

<Preparation of Yellow Pigment Dispersion Liquid 6>

Yellow Pigment Dispersion Liquid 6 was obtained in the same manner as Yellow Pigment Dispersion Liquid 1, provided that C.I. Pigment Yellow 53 was used as the yellow pigment.

<Preparation of Yellow Pigment Dispersion Liquid 7>

Yellow Pigment Dispersion Liquid 7 was obtained in the same manner as Yellow Pigment Dispersion Liquid 1, provided that C.I. Pigment Yellow 55 was used as the yellow pigment.

<Preparation of Yellow Pigment Dispersion Liquid 8>

Yellow Pigment Dispersion Liquid 8 was obtained in the same manner as Yellow Pigment Dispersion Liquid 1, provided that C.I. Pigment Yellow 74 was used as the yellow pigment.

<Preparation of Yellow Pigment Dispersion Liquid 9>

Yellow Pigment Dispersion Liquid 9 was obtained in the same manner as Yellow Pigment Dispersion Liquid 1, provided that C.I. Pigment Yellow 83 was used as the yellow pigment.

<Preparation of Yellow Pigment Dispersion Liquid 10>

Yellow Pigment Dispersion Liquid 10 was obtained in the same manner as Yellow Pigment Dispersion Liquid 1, provided that C.I. Pigment Yellow 151 was used as the yellow pigment.

<Preparation of Yellow Pigment Dispersion Liquid 11>

Yellow Pigment Dispersion Liquid 11 was obtained in the same manner as Yellow Pigment Dispersion Liquid 1, provided that C.I. Pigment Yellow 153 was used as the yellow pigment.

<Preparation of Magenta Pigment Dispersion Liquid 1>

Magenta Pigment Dispersion Liquid 1 was obtained in the same manner as Cyan Pigment Dispersion Liquid 1, provided that the cyan pigment was replaced with a magenta pigment (C.I. Pigment Red 122).

<Preparation of Magenta Pigment Dispersion Liquid 2>

Magenta Pigment Dispersion Liquid 2 was obtained in the same manner as magenta pigment dispersion liquid 1, provided that C.I. Pigment Red 146 was used as the magenta pigment.

<Preparation of Magenta Pigment Dispersion Liquid 3>

Magenta Pigment Dispersion Liquid 3 was obtained in the same manner as magenta pigment dispersion liquid 1, provided that C.I. Pigment Violet 19 was used as the magenta pigment.

<Preparation of Black Pigment Dispersion Liquid 1>

Black Pigment Dispersion Liquid 1 was obtained in the same manner as Cyan Pigment Dispersion Liquid 1, provided that the cyan pigment was replaced with a black pigment (carbon black FW100 (manufactured by EVONIK INDUSTRIES)).

<Example 1>

After blending 20 parts of propylene glycol and 4 parts of diethylene glycol diethyl ether serving as the water-soluble organic solvents (X), 5 parts of 2-methyl-2,4-pentanediol serving as the water-soluble organic solvent (Y), 8 parts of glycerin serving as the water-soluble organic solvent (G), 1 part of 2-ethyl-1,3-hexanediol (boiling point: 243°C) serving as a penetrating agent, 1 part of SOFTANOL EP-7025 (manufactured by NIPPON SHOKUBAI CO., LTD.) serving as a surfactant, 0.05 parts of Proxel GXL (manufactured by NITTO DENKO AVECIA INC.) serving as an antifungal agent, 0.05 parts of a silicone antifoaming agent KM-72F (manufactured by Mitsui Chemicals, Inc.), and 20.9 parts of pure water, the resulting mixture was stirred for 1 hour. Subsequently, 40 parts of Yellow Pigment Dispersion Liquid 10, and the resultant was stirred for 1 hour, followed by filtering with a polyvinylidene fluoride membrane filter having the average pore diameter of 5.0 $\mu$m under the pressure, to thereby obtain a yellow ink. Note that, SOFTANOL EP-7025 is composed of polyoxyalkylene alkyl ether.

<Example 2>

After blending 40 parts of propylene glycol serving as the water-soluble organic solvent (X), 2 parts of 1,2-butanediol serving as the water-soluble organic solvent (Y), 2 parts of glycerin serving as the water-soluble organic solvent (G), 1 part of 2-ethyl-1,3-hexanediol(boiling point: 243°C) serving as a penetrating agent, 1 part of a surfactant, SOFTANOL EP-7025 (manufactured by NIPPON SHOKUBAI CO., LTD.), 0.05 parts of an antifungal agent Proxel GXL (manufactured by NITTO DENKO AVECIA INC.), 0.05 parts of a silicone antifoaming agent KM-72F (manufactured by Mitsui Chemicals, Inc.), and 13.9 parts of pure water, the resulting mixture was stirred for 1 hour. Subsequently, 40 parts of Cyan Pigment Dispersion Liquid 3, and the resultant was stirred for 1 hour, followed by filtering with a polyvinylidene fluoride membrane filter having the average pore diameter of 5.0 μm under the pressure, to thereby obtain a cyan ink.

<Example 3>

After blending 24 parts of 2,3-butanediol serving as the water-soluble organic solvent (X), 12 parts of 1,2-butanediol serving as the water-soluble organic solvent (Y), 4 parts of glycerin serving as the water-soluble organic solvent (G), 1 part of 2-ethyl-1,3-hexanediol(boiling point: 243°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 17.9 parts of pure water, the resulting mixture was stirred for 1 hour. Subsequently, 40 parts of Yellow Pigment Dispersion Liquid 3, and the resultant was stirred for 1 hour, followed by filtering with a polyvinylidene fluoride membrane filter having the average pore diameter of 5.0 μm under the pressure, to thereby obtain a yellow ink.

<Example 4>

A yellow ink was obtained in the same manner as in Example 2, provided that Cyan Pigment Dispersion Liquid 3 was replaced with Yellow Pigment Dispersion Liquid 8.

<Example 5>

After blending 36 parts of 2,3-butanediol serving as the water-soluble organic solvent (X), 5 parts of 1,2-butanediol serving as the water-soluble organic solvent (Y), 1 part of glycerin serving as the water-soluble organic solvent (G), 1 part of 2,2,4-trimethyl-1,3-pentanediol(boiling point: 232°C) serving as a penetrating agent, 2.5 parts of a surfactant, Zonyl FS-300 (manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 14.4 parts of pure water, the resulting mixture was stirred for 1 hour. Subsequently, 40 parts of Yellow Pigment Dispersion Liquid 6, and the resultant was stirred for 1 hour, followed by filtering with a polyvinylidene fluoride membrane filter having the average pore diameter of 5.0 μm under the pressure, to thereby obtain a yellow ink. Note that, Zonyl FS-300 contains 40% by mass of polyoxyethylene perfluoroalkyl ether.

<Example 6>

After blending 36 parts of propylene glycol serving as the water-soluble organic solvent (X), 5 parts of 2-methyl-2,4-pentanediol serving as the water-soluble organic solvent (Y), 2 parts of glycerin serving as the water-soluble organic solvent (G), 1 part of 2,2,4-trimethyl-1,3-pentanediol(boiling point: 232°C) serving as a penetrating agent, 2.5 parts of a surfactant, Zonyl FS-300 (manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 13.4 parts of pure water, the resulting mixture was stirred for 1 hour. Subsequently, 40 parts of Yellow Pigment Dispersion Liquid 1, and the resultant was stirred for 1 hour, followed by filtering with a polyvinylidene fluoride membrane filter having the average pore diameter of 5.0 μm under the pressure, to thereby obtain a yellow ink.

<Example 7>

After blending 32 parts of 2,3-butanediol serving as the water-soluble organic solvent (X), 4 parts of 2-methyl-2,4-pentanediol serving as the water-soluble organic solvent (Y), 6 parts of glycerin serving as the water-soluble organic solvent (G), 1 part of 2,2,4-trimethyl-1,3-pentanediol(boiling point: 232°C) serving as a penetrating agent, 2.5 parts of a surfactant, Zonyl FS-300(manufactured by Du Pont Kabushiki Kaisha), 0.05 parts of an antifungal agent Proxel GXL (manufactured by NITTO DENKO AVECIA INC.), 0.05 parts of a silicone antifoaming agent, KM-72F (manufactured by Mitsui Chemicals, Inc.), and 14.4 parts of pure water, the resulting mixture was stirred for 1 hour. Subsequently, 40 parts of Yellow Pigment Dispersion Liquid 4, and the resultant was stirred for 1 hour, followed by filtering with a polyvinylidene fluoride membrane filter having the average pore diameter of 5.0 μm under the pressure, to thereby obtain a yellow ink.

<Example 8>

After blending 31 parts of 2,3-butanediol serving as the water-soluble organic solvent (X), 3 parts of 1,2-butanediol serving as the water-soluble organic solvent (Y), 7 parts of glycerin serving as the water-soluble organic solvent (G), 1 part of 2,2,4-trimethyl-1,3-pentanediol (boiling point: 232°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 15.4 parts of pure water, the resulting mixture was stirred for 1 hour. Subsequently, 40 parts of Yellow Pigment Dispersion Liquid 2, and the resultant was stirred for 1 hour, followed by filtering with a polyvinylidene fluoride membrane filter having the average pore diameter of 5.0 $\mu$m under the pressure, to thereby obtain a yellow ink.

<Example 9>

After blending 28 parts of propylene glycol serving as the water-soluble organic solvent (X), 1.5 parts of diethylene glycol monomethyl ether serving as the water-soluble organic solvent (Y), 8 parts of glycerin serving as the water-soluble organic solvent (G), 1 part of 2-ethyl-1,3-hexanediol (boiling point: 243°C) serving as a penetrating agent, 2.5 parts of a surfactant, Zonyl FS-300 (manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 18.9 parts of pure water, the resulting mixture was stirred for 1 hour. Subsequently, 40 parts of Yellow Pigment Dispersion Liquid 5, and the resultant was stirred for 1 hour, followed by filtering with a polyvinylidene fluoride membrane filter having the average pore diameter of 5.0 $\mu$m under the pressure, to thereby obtain a yellow ink.

<Example 10>

After blending 35 parts of 2,3-butanediol serving as the water-soluble organic solvent (X), 2 parts of 2-methyl-2,4-pentanediol serving as the water-soluble organic solvent (Y), 4 parts of glycerin serving as the water-soluble organic solvent (G), 1 part of 2-ethyl-1,3-hexanediol(boiling point: 243°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 15.4 parts of pure water, the resulting mixture was stirred for 1 hour. Subsequently, 40 parts of Yellow Pigment Dispersion Liquid 7, and the resultant was stirred for 1 hour, followed by filtering with a polyvinylidene fluoride membrane filter having the average pore diameter of 5.0 $\mu$m under the pressure, to thereby obtain a yellow ink.

<Example 11>

After blending 25 parts of propylene glycol serving as the water-soluble organic solvent (X), 10 parts of 1,2-butanediol serving as the water-soluble organic solvent (Y), 4 parts of glycerin serving as the water-soluble organic solvent (G), 1 part of 2-ethyl-1,3-hexanediol(boiling point: 243°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 17.4 parts of pure water, the resulting mixture was stirred for 1 hour. Subsequently, 40 parts of Cyan Pigment Dispersion Liquid 2, and the resultant was stirred for 1 hour, followed by filtering with a polyvinylidene fluoride membrane filter having the average pore diameter of 5.0 $\mu$m under the pressure, to thereby obtain a cyan ink.

<Example 12>

After blending 26 parts of 2,3-butanediol serving as the water-soluble organic solvent (X), 11 parts of 1,2-butanediol serving as the water-soluble organic solvent (Y), 4 parts of glycerin serving as the water-soluble organic solvent (G), 1 part of 2-ethyl-1,3-hexanediol(boiling point: 243°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 15.4 parts of pure water, the resulting mixture was stirred for 1 hour. Subsequently, 40 parts of Yellow Pigment Dispersion Liquid 9, and the resultant was stirred for 1 hour, followed by filtering with a polyvinylidene fluoride membrane filter having the average pore diameter of 5.0 $\mu$m under the pressure, to thereby obtain a yellow ink.

<Example 13>

After blending 38 parts of propylene glycol serving as the water-soluble organic solvent (X), 5 parts of 1,2-butanediol serving as the water-soluble organic solvent (Y), 1 part of glycerin serving as the water-soluble organic solvent (G), 1 part of 2,2,4-trimethyl-1,3-pentanediol (boiling point: 232°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 12.4 parts of pure water, the resulting mixture was stirred for 1 hour. Subsequently, 40 parts of Cyan Pigment Dispersion Liquid 4, and the resultant was stirred for 1 hour, followed by filtering with a polyvinylidene fluoride membrane filter having the average pore diameter of 5.0 μm under the pressure, to thereby obtain a cyan ink.

<Example 14>

After blending 15 parts of 2,3-butanediol and 15 parts of propylene glycol serving as the water-soluble organic solvents (X), 5 parts of 1,2-butanediol serving as the water-soluble organic solvent (Y), 3 parts of glycerin serving as the water-soluble organic solvent (G), 1 part of 2-ethyl-1,3-hexanediol(boiling point: 243°C) serving as a penetrating agent, 1 part of a surfactant, SOFTANOL EP-7025 (manufactured by NIPPON SHOKUBAI CO., LTD.), 4 parts of an acryl-silicone resin emulsion (solid content: 37.2% by mass) Polysol ROY6312 (manufactured by Showa Denko K.K.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 15.9 parts of pure water, the resulting mixture was stirred for 1 hour. Subsequently, 40 parts of Yellow Pigment Dispersion Liquid 11, and the resultant was stirred for 1 hour, followed by filtering with a polyvinylidene fluoride membrane filter having the average pore diameter of 5.0 μm under the pressure, to thereby obtain a yellow ink.

<Example 15>

After blending 30 parts of propylene glycol serving as the water-soluble organic solvent (X), 2 parts of 1,2-butanediol and 2 parts of 2-methyl-2,4-pentanediol serving as the water-soluble organic solvents (Y), 2 parts of glycerin serving as the water-soluble organic solvent (G), 1 part of 2-ethyl-1,3-hexanediol(boiling point: 243°C) serving as a penetrating agent, 1 part of a surfactants SOFTANOL EP-7025 (manufactured by NIPPON SHOKUBAI CO., LTD.), 4 parts of a urethane resin emulsion (solid content: 35% by mass) Takerak W5661(manufactured by Mitsui Chemicals, Inc.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 12.4 parts of pure water, the resulting mixture was stirred for 1 hour. Subsequently, 40 parts of Cyan Pigment Dispersion Liquid 4, and the resultant was stirred for 1 hour, followed by filtering with a polyvinylidene fluoride membrane filter having the average pore diameter of 5.0 μm under the pressure, to thereby obtain a cyan ink.

<Example 16>

After blending 30 parts of 2,3-butanediol serving as the water-soluble organic solvent (X), 5 parts of 2-methyl-2,4-pentanediol serving as the water-soluble organic solvent (Y), 5 parts of glycerin serving as the water-soluble organic solvent (G), 1 part of 2-ethyl-1,3-hexanediol(boiling point: 243°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 16.4 parts of pure water, the resulting mixture was stirred for 1 hour. Subsequently, 40 parts of Cyan Pigment Dispersion Liquid 4, and the resultant was stirred for 1 hour, followed by filtering with a polyvinylidene fluoride membrane filter having the average pore diameter of 5.0 μm under the pressure, to thereby obtain a cyan ink.

<Example 17>

A yellow ink was obtained in the same manner as in Example 16, provided that Cyan Pigment Dispersion Liquid 4 was replaced with Yellow Pigment Dispersion Liquid 11.

<Example 18>

After blending 36 parts of propylene glycol serving as the water-soluble organic solvent (X), 5 parts of 1,2-butanediol serving as the water-soluble organic solvent (Y), 2 parts of glycerin serving as the water-soluble organic solvent (G), 1 part of 2-ethyl-1,3-hexanediol(boiling point: 243°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 13.4 parts of pure water, the resulting mixture was stirred for 1 hour. Subsequently, 40 parts of Cyan Pigment Dispersion Liquid 3, and the resultant was stirred for 1 hour, followed by filtering with a polyvinylidene fluoride membrane filter having the average pore diameter of 5.0 μm under the pressure, to thereby obtain a cyan ink.

<Example 19>

A yellow ink was obtained in the same manner as in Example 16, provided that Cyan Pigment Dispersion Liquid 3 was replaced with Yellow Pigment Dispersion Liquid 8.

<Example 20>

After blending 30 parts of propylene glycol serving as the water-soluble organic solvent (X), 4 parts of 2-methyl-2,4-pentanediol serving as the water-soluble organic solvent (Y), 8 parts of glycerin serving as the water-soluble organic solvent (G), 1 part of 2,2,4-trimethyl-pentanediol(boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent KM-72F (manufactured by Mitsui Chemicals, Inc.), and 15.9 parts of pure water, the resulting mixture was stirred for 1 hour. Subsequently, 40 parts of Cyan Pigment Dispersion Liquid 3, and the resultant was stirred for 1 hour, followed by filtering with a polyvinylidene fluoride membrane filter having the average pore diameter of 5.0 μm under the pressure, to thereby obtain a cyan ink.

<Example 21>

A yellow ink was obtained in the same manner as in Example 16, provided that Cyan Pigment Dispersion Liquid 3 was replaced with Yellow Pigment Dispersion Liquid 8.

<Example 22>

After blending 36 parts of 2,3-butanediol serving as the water-soluble organic solvent (X), 5 parts of 1,2-butanediol serving as the water-soluble organic solvent (Y), 2 parts of glycerin serving as the water-soluble organic solvent (G), 1 part of 2-ethyl-1,3-hexanediol(boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 14.9 parts of pure water, the resulting mixture was stirred for 1 hour. Subsequently, 40 parts of Cyan Pigment Dispersion Liquid 2, and the resultant was stirred for 1 hour, followed by filtering with a polyvinylidene fluoride membrane filter having the average pore diameter of 5.0 μm under the pressure, to thereby obtain a cyan ink.

<Example 23>

A yellow ink was obtained in the same manner as in Example 22, provided that Cyan Pigment Dispersion Liquid 2 was replaced with Yellow Pigment Dispersion Liquid 10.

<Example 24>

After blending 36 parts of propylene glycol serving as the water-soluble organic solvent (X), 4 parts of 1,2-butanediol serving as the water-soluble organic solvent (Y), 3 parts of glycerin serving as the water-soluble organic solvent (G), 1 part of 2,2,4-trimethyl-pentanediol(boiling point: 232°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 13.4 parts of pure water, the resulting mixture was stirred for 1 hour. Subsequently, 40 parts of Cyan Pigment Dispersion Liquid 4, and the resultant was stirred for 1 hour, followed by filtering with a polyvinylidene fluoride membrane filter having the average pore diameter of 5.0 μm under the pressure, to thereby obtain a cyan ink.

<Example 25>

A yellow ink was obtained in the same manner as in Example 24, provided that Cyan Pigment Dispersion Liquid 4 was replaced with Yellow Pigment Dispersion Liquid 11.

<Example 26>

After blending 25 parts of propylene glycol serving as the water-soluble organic solvent (X), 10 parts of 1,2-butanediol serving as the water-soluble organic solvent (Y), 3 parts of glycerin serving as the water-soluble organic solvent (G), 1 part of 2-ethyl-1,3-hexanediol(boiling point: 232°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent KM-72F (manufactured by Mitsui Chemicals, Inc.), and 8.4 parts of pure water, the resulting mixture was stirred for 1 hour. Subsequently, 50 parts of Black Pigment Dispersion Liquid 1, and the resultant was stirred for 1 hour, followed by filtering with a polyvinylidene fluoride membrane filter having the average pore diameter of 5.0 μm under the pressure, to thereby obtain a black ink.

<Example 27>

After blending 25 parts of propylene glycol serving as the water-soluble organic solvent (X), 10 parts of 1,2-butanediol serving as the water-soluble organic solvent (Y), 2 parts of glycerin serving as the water-soluble organic solvent (G), 1 part of 2,2,4-trimethyl-pentanediol(boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 10.9 parts of pure water, the resulting mixture was stirred for 1 hour. Subsequently, 50 parts of Magenta Pigment Dispersion Liquid 1, and the resultant was stirred for 1 hour, followed by filtering with a polyvinylidene fluoride membrane filter having the average pore diameter of 5.0 μm under the pressure, to thereby obtain a magenta ink.

<Comparative Example 1>

After blending 24 parts of 2,3-butanediol serving as the water-soluble organic solvent (X), 2 parts of 1,2-butanediol serving as the water-soluble organic solvent (Y), 1 part of 2-ethyl-1,3-hexanediol(boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 31.9 parts of pure water, the resulting mixture was stirred for 1 hour. Subsequently, 40 parts of Cyan Pigment Dispersion Liquid 4, and the resultant was stirred for 1 hour, followed by filtering with a polyvinylidene fluoride membrane filter having the average pore diameter of 5.0 μm under the pressure, to thereby obtain a cyan ink.

<Comparative Example 2>

After blending 40 parts of propylene glycol serving as the water-soluble organic solvent (X), 2 parts of 2-methyl-2,4-pentanediol serving as the water-soluble organic solvent (Y), 1 part of 2,2,4-trimethyl-pentanediol(boiling point: 232°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 14.4 parts of pure water, the resulting mixture was stirred for 1 hour. Subsequently, 40 parts of Yellow Pigment Dispersion Liquid 7, and the resultant was stirred for 1 hour, followed by filtering with a polyvinylidene fluoride membrane filter having the average pore diameter of 5.0 μm under the pressure, to thereby obtain a yellow ink.

<Comparative Example 3>

After blending 34 parts of 2,3-butanediol serving as the water-soluble organic solvent (X), 2 parts of diethylene glycol monomethyl ether serving as the water-soluble organic solvent (Y), 8 parts of 1,5-pentanediol (boiling point: 242°C) serving as a water-soluble organic solvent, 1 part of 2,2,4-trimethyl-pentanediol (boiling point: 232°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 12.4 parts of pure water, the resulting mixture was stirred for 1 hour. Subsequently, 40 parts of Cyan Pigment Dispersion Liquid 3, and the resultant was stirred for 1 hour, followed by filtering with a polyvinylidene fluoride membrane filter having the average pore diameter of 5.0 μm under the pressure, to thereby obtain a cyan ink.

<Comparative Example 4>

After blending 20 parts of propylene glycol and 4 parts of diethylene glycol diethyl ether serving as the water-soluble organic solvents (X), 10 parts of 1,2-butanediol serving as the water-soluble organic solvent (Y), 8 parts of 1,2-hexanediol (boiling point: 223°C) serving as a water-soluble organic solvent, 1 part of 2,2,4-trimethyl-pentanediol (boiling point: 232°C) serving as a penetrating agent, 2.5 parts of a surfactant, Zonyl FS-300 (manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 14.4 parts of pure water, the resulting mixture was stirred for 1 hour. Subsequently, 40 parts of Yellow Pigment Dispersion Liquid 9, and the resultant was stirred for 1 hour, followed by filtering with a polyvinylidene fluoride membrane filter having the average pore diameter of 5.0 $\mu$m under the pressure, to thereby obtain a yellow ink.

<Comparative Example 5>

After blending 23 parts of propylene glycol serving as the water-soluble organic solvent (X), 11 parts of 1,2-butanediol serving as the water-soluble organic solvent (Y), 2 parts of glycerin serving as the water-soluble organic solvent (G), 1 part of 2,2,4-trimethyl-pentanediol (boiling point: 232°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 20.4 parts of pure water, the resulting mixture was stirred for 1 hour. Subsequently, 40 parts of Cyan Pigment Dispersion Liquid 3, and the resultant was stirred for 1 hour, followed by filtering with a polyvinylidene fluoride membrane filter having the average pore diameter of 5.0 $\mu$m under the pressure, to thereby obtain a cyan ink.

<Comparative Example 6>

After blending 41 parts of propylene glycol serving as the water-soluble organic solvent (X), 4 parts of 1,2-butanediol serving as the water-soluble organic solvent (Y), 3 parts of glycerin serving as the water-soluble organic solvent (G), 1 part of 2,2,4-trimethyl-pentanediol (boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 9.9 parts of pure water, the resulting mixture was stirred for 1 hour. Subsequently, 40 parts of Yellow Pigment Dispersion Liquid 8, and the resultant was stirred for 1 hour, followed by filtering with a polyvinylidene fluoride membrane filter having the average pore diameter of 5.0 $\mu$m under the pressure, to thereby obtain a yellow ink.

<Comparative Example 7>

After blending 24 parts of propylene glycol serving as the water-soluble organic solvent (X), 15 parts of 1,2-butanediol serving as the water-soluble organic solvent (Y), 2 parts of glycerin serving as the water-soluble organic solvent (G), 1 part of 2,2,4-trimethyl-pentanediol (boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 16.9 parts of pure water, the resulting mixture was stirred for 1 hour. Subsequently, 40 parts of Yellow Pigment Dispersion Liquid 10, and the resultant was stirred for 1 hour, followed by filtering with a polyvinylidene fluoride membrane filter having the average pore diameter of 5.0 $\mu$m under the pressure, to thereby obtain a yellow ink.

<Comparative Example 8>

After blending 45 parts of propylene glycol serving as the water-soluble organic solvent (X), 3 parts of glycerin serving as the water-soluble organic solvent (G), 1 part of 2,2,4-trimethyl-pentanediol (boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 9.9 parts of pure water, the resulting mixture was stirred for 1 hour. Subsequently, 40 parts of Yellow Pigment Dispersion Liquid 6, and the resultant was stirred for 1 hour, followed by filtering with a polyvinylidene fluoride membrane filter having the average pore diameter of 5.0 $\mu$m under the pressure, to thereby obtain a yellow ink.

<Comparative Example 9>

After blending 43 parts of propylene glycol serving as the water-soluble organic solvent (X), 2 parts of 1,2-butanediol serving as the water-soluble organic solvent (Y), 3 parts of glycerin serving as the water-soluble organic solvent (G), 1 part of 2,2,4-trimethyl-pentanediol (boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 9.9 parts of pure water, the resulting mixture was stirred for 1 hour. Subsequently, 40 parts of Yellow Pigment Dispersion Liquid 6, and the resultant was stirred for 1 hour, followed by filtering with a polyvinylidene fluoride membrane filter having the average pore diameter of 5.0 μm under the pressure, to thereby obtain a yellow ink.

The properties of the inks of Examples and Comparative Examples are presented in Table 1.

[Table 1]

|  | X [mass%} | X/Y | G[mass%] | Y[mass%] | X+Y [mass%] |
|---|---|---|---|---|---|
| Ex. 1 | 24 | 4.8 | 8 | 5 | 29 |
| Ex. 2 | 40 | 20.0 | 2 | 2 | 42 |
| Ex. 3 | 24 | 2.0 | 4 | 12 | 36 |
| Ex. 4 | 40 | 20.0 | 2 | 2 | 42 |
| Ex. 5 | 36 | 7.2 | 1 | 5 | 41 |
| Ex. 6 | 36 | 7.2 | 2 | 5 | 41 |
| Ex. 7 | 32 | 8.0 | 6 | 4 | 36 |
| Ex. 8 | 31 | 10.3 | 7 | 3 | 34 |
| Ex. 9 | 28 | 18.7 | 8 | 1.5 | 29.5 |
| Ex. 10 | 35 | 17.5 | 4 | 2 | 37 |
| Ex. 11 | 25 | 2.5 | 4 | 10 | 35 |
| Ex. 12 | 26 | 2.4 | 4 | 11 | 37 |
| Ex. 13 | 38 | 7.6 | 1 | 5 | 43 |
| Ex. 14 | 30 | 6.0 | 3 | 5 | 35 |
| Ex. 15 | 30 | 7.5 | 2 | 4 | 34 |
| Ex. 16 | 30 | 6.0 | 5 | 5 | 35 |
| Ex. 1 7 | 30 | 6.0 | 5 | 5 | 35 |
| Ex. 18 | 36 | 7.2 | 2 | 5 | 41 |
| Ex. 19 | 36 | 7.2 | 2 | 5 | 41 |
| Ex. 20 | 30 | 7.5 | 8 | 4 | 34 |
| Ex. 21 | 30 | 7.5 | 8 | 4 | 34 |
| Ex. 22 | 36 | 7.2 | 2 | 5 | 41 |
| Ex. 23 | 36 | 7.2 | 2 | 5 | 41 |
| Ex. 24 | 36 | 9.0 | 3 | 4 | 40 |
| Ex. 25 | 36 | 9.00 | 3 | 4 | 40 |
| Ex. 26 | 25 | 2.5 | 3 | 10 | 35 |
| Ex. 27 | 25 | 2.5 | 2 | 10 | 35 |
| Comp. Ex. 1 | 24 | 12.0 | 0 | 2 | 26 |
| Comp. Ex. 2 | 40 | 20.0 | 0 | 2 | 42 |

(continued)

|  | X [mass%} | X/Y | G[mass%] | Y[mass%] | X+Y [mass%] |
|---|---|---|---|---|---|
| Comp. Ex. 3 | 34 | 17.0 | 0 | 2 | 36 |
| Comp. Ex. 4 | 24 | 2.4 | 0 | 10 | 34 |
| Comp. Ex. 5 | 23 | 2.1 | 2 | 11 | 34 |
| Comp. Ex. 6 | 41 | 10.3 | 3 | 4 | 45 |
| Comp. Ex. 7 | 24 | 1.6 | 2 | 15 | 39 |
| Comp. Ex. 8 | 45 | NA | 3 | 0 | 45 |
| Comp. Ex. 9 | 43 | 21.5 | 3 | 2 | 45 |

Next, the inks of Examples and Comparative Examples were evaluated in terms of stability over time, image density, ejection stability, maintainability and drying performance.

<Stability over Time>

Just after the ink was produced, a viscosity of the ink was measured, and determined as an initial viscosity. After storing the ink in a thermostat chamber of 70°C for 2 weeks, a viscosity of the ink was measured, and determined as a viscosity after storage. Note that, the initial viscosity and the viscosity after storage were measured by means of a viscometer RE-550L (manufactured by Toki Sangyo Co., Ltd.) at 25°C. Moreover, stability of the ink over time was evaluated by calculating a changing rate of the viscosity from the formula below:

$$\text{(Viscosity after storage - Initial viscosity)/Initial viscosity} \times 100$$

Note that, a case where the changing rate of the viscosity was less than 5% was judged as I, a case where the changing rate of the viscosity was 5% or greater but less than 10% was judged as II, and a case where the changing rate of the viscosity was 10% or greater was judged as III.

<Image Density on Coated Paper for Printing>

After charging an inkjet printer, IPSIO GX5500 (manufactured by Ricoh Company Limited) with the ink, LumiArt (manufactured by StoraEnso) was set in the inkjet printer. A chart including a 64 point letter "square" created by Word2000 (of Microsoft), was printed at the resolution of 600 dpi. Note that, "square" is a letter (symbol) where a square is filled with a solid color. Subsequently, the image density of the resultant was measured by means of a color reflection densitometer (manufactured by X-Rite Inc.). In case of the yellow ink, a case where the image density was 1.1 or greater was judged as I, a case where the image density was 1.0 or greater but less than 1.1 was judged as II, and a case where the image density was less than 1.0 was judged as III. In case of the cyan ink, a case where the image density was 1.6 or greater was judged as I, a case where the image density was 1.3 or greater but less than 1.6 was judged as II, and a case where the image density was less than 1.3 was judged as III. In case of the black ink, a case where the image density was 1.2 or greater was judged as I, a case where the image density was 1.15 or greater but less than 1.2 was judged as II, and a case where the image density was less than 1.15 was judged as III. In case of the magenta ink, a case where the image density was 1.0 or greater was judged as I, a case where the image density was 0.95 or greater but less than 1.0 was judged as II, and a case where the image density was less than 0.95 was judged as III.

<Image Density on Plain paper>

The image density was measured in the same manner as the image density on the coated paper for printing, provided that LumiArt (manufactured by StoraEnso) was replaced with MyPaper (manufactured by Ricoh Company Limited). In case of the yellow ink, a case where the image density was 0.8 or greater was judged as I, a case where the image density was 0.75 or greater but less than 0.8 was judged as II, and a case where the image density was less than 0.75 was judged as III. In case of the cyan ink, a case where the image density is 1.0 or greater was judged as I, a case where the image density was 0.95 or greater but less than 1.0 was judged as II, and a case where the image density was less than 0.95 was judged as III. In case of the black ink, a case where the image density was 1.6 or greater was judged as I, a case where the image density was 1.3 or greater but less than 1.6 was judged as II, and a case where the image density was less than 1.3 was judged as III. In case of the magenta ink, a case where the image density was 1.4 or greater was judged as I, a case where the image density was 1.1 or greater but less than 1.4 was judged as II, and a case where the image density was less than 1.1 was judged as III.

<Ejection Stability>

After charging an inkjet printer, IPSIO GX5500 (manufactured by Ricoh Company Limited) with the ink, a chart, in which a solid image having an area of 5% relative to an A4-size sheet was formed per color, created by Word2000 (of Microsoft) was successively printed on 200 sheets of MyPaper (manufactured by Ricoh Company Limited). Thereafter, any disturbance in ejection from each nozzle was evaluated as ejection stability. In this test, the printing mode for use was a mode where "plain paper-high speed" mode was modified to add "no color correction" through a user setting of plain paper using a driver attached to the printer. A case where there was no disturbance in ejection was judged as I, a case where there was slight disturbance in ejection was judged as II, and a case where there was disturbance in ejection or there is a part from which the ink cannot be ejected was judged as III.

<Maintainability>

After charging an inkjet printer, IPSIO GX5500 (manufactured by Ricoh Company Limited) with the ink, the printer was left to stand for 24 hours in a thermostat chamber of 40°C in a decapped state. Subsequently, head-refreshing was performed using a printer driver, and maintainability was evaluated. A case where the number of head-refreshing performed was 3 times or less to achieve ejection of the ink from all the nozzles was judged as I, a case where the number of head-refreshing performed was 4 times to 10 times was judged as II, and a case where the ink was not ejected from all of the nozzles even after performing head-refreshing 10 times was judged as III.

<Drying Performance in Coated Paper for Printing>

After charging an inkjet printer, IPSIO GX5500 (manufactured by Ricoh Company Limited) with the ink, LumiArt (manufactured by StoraEnso) was set in the printer. After printing a text solid image using Word2013 (of Microsoft), the resultant was dried for 30 seconds in a thermostat chamber of 80°C. As for the printing mode, used was a "plain paper-high speed" mode set through a user setting of plain paper using a driver attached to the printer. Subsequently, filter paper was pressed against the solid image area, and a degree of the ink transferred to the filter paper was visually observed, and the drying performance of the ink was evaluated. A case where the ink was not transferred to the filter paper at all was judged as I, a case where the ink was slightly transferred to the filter paper was judged as II, and a case where the ink was significantly transferred to the filter paper was judged as III.

<Drying Performance on Plain Paper>

The drying performance was evaluated in the same manner as the drying performance on the coated paper for printing, provided that LumiArt (manufactured by StoraEnso) was replaced with MyPaper (manufactured by Ricoh Company Limited).
The evaluation results of the ink of Examples and Comparative Examples, in terms of the stability over time, the image density, the ejection stability, the maintainability and the drying performance, are presented in Table 2.

[Table 2]

| | Stability over time | Image density | | Ejection stability | Maintainability | Drying performance | |
| | | Printing coated paper | Plain paper | | | Printing coated paper | Plain paper |
|---|---|---|---|---|---|---|---|
| Ex. 1 | II | I | I | I | II | II | I |
| Ex. 2 | I | I | I | I | I | II | I |
| Ex. 3 | II | I | I | I | I | I | I |
| Ex. 4 | I | I | I | I | I | II | I |
| Ex. 5 | I | I | I | I | II | I | I |
| Ex. 6 | I | I | I | I | I | I | I |

(continued)

| | Stability over time | Image density | | Ejection stability | Maintainability | Drying performance | |
|---|---|---|---|---|---|---|---|
| | | Printing coated paper | Plain paper | | | Printing coated paper | Plain paper |
| Ex. 7 | I | I | I | I | I | I | I |
| Ex. 8 | I | I | I | I | I | II | I |
| Ex. 9 | I | I | II | I | I | II | I |
| Ex. 10 | I | I | I | I | I | I | I |
| Ex. 11 | II | I | I | I | I | I | I |
| Ex. 12 | II | I | I | I | I | I | I |
| Ex. 13 | I | I | I | II | I | II | I |
| Ex. 14 | I | I | I | I | II | I | I |
| Ex. 15 | I | I | I | I | II | I | I |
| Ex. 16 | I | I | I | I | I | I | I |
| Ex. 17 | I | I | I | I | I | I | I |
| Ex. 18 | I | I | I | I | I | I | I |
| Ex. 19 | I | I | I | I | I | I | I |
| Ex. 20 | I | I | II | I | I | II | I |
| Ex. 21 | I | I | II | I | I | II | I |
| Ex. 22 | I | I | I | I | I | I | I |
| Ex. 23 | I | I | I | I | I | I | I |
| Ex. 24 | I | I | I | I | I | I | I |
| Ex. 25 | I | I | I | I | I | I | I |
| Ex. 26 | II | I | I | I | I | I | I |
| Ex. 27 | II | I | I | I | I | I | I |
| Comp. Ex. 1 | I | I | I | III | III | I | I |
| Comp. Ex. 2 | I | I | I | I | III | I | I |
| Comp. Ex. 3 | I | I | I | I | III | III | I |
| Comp. Ex. 4 | I | I | I | I | III | III | I |
| Comp. Ex. 5 | III | I | I | II | III | I | I |
| Comp. Ex. 6 | I | I | I | II | I | III | I |
| Comp. Ex. 7 | III | I | I | I | I | I | I |
| Comp. Ex. 8 | I | I | II | III | I | III | I |
| Comp. Ex. 9 | I | I | I | III | I | III | I |

It was found from Table 2 that the inks of Examples had excellent stability over time, ejection stability, maintainability and drying performance.

On the other hand, the inks of Comparative Examples 1 to 4 had low maintainability, as the amount of (G) was 0.

The ink of Comparative Example 5 had low stability over time, and low maintainability, as the amount of (X) was 23% by mass.

The ink of Comparative Example 6 had poor drying performance on coated paper for printing, as the amount of (X) was 41%.

The ink of Comparative Example 7 had low stability over time, as the ratio X/Y was 1.6.

The ink of Comparative Example 8 had low drying performance on coated paper for printing, as the amount of (Y) was 0.

The ink of Comparative Example 9 had poor drying performance on coated paper for printing, as the ratio X/Y was 21.5.

<Production of Ink Set 1>

After blending 20 parts of 2,3-butanediol serving as the water-soluble organic solvent (X), 10 parts of 2-methyl-2,4-pentanediol serving as the water-soluble organic solvent (Y), 6 parts of glycerin serving as the water-soluble organic solvent (G), 1 part of 2-ethyl-1,3-hexanediol (boiling point: 243°C) serving as a penetrating agent, 2.5 parts of a surfactant, Zonyl FS-300 (manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 10.4 parts of pure water, the resulting mixture was stirred for 1 hour. Subsequently, 50 parts of Black Pigment Dispersion Liquid 1, and the resultant was stirred for 1 hour, followed by filtering with a polyvinylidene fluoride membrane filter having the average pore diameter of 5.0 $\mu$m under the pressure, to thereby obtain a black ink.

After blending 24 parts of 2,3-butanediol serving as the water-soluble organic solvent (X), 10 parts of glycerin serving as the water-soluble organic solvent (G), 1 part of 2-ethyl-1,3-hexanediol (boiling point: 243°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 12.4 parts of pure water, the resulting mixture was stirred for 1 hour. Subsequently, 50 parts of Magenta Pigment Dispersion Liquid 1, and the resultant was stirred for 1 hour, followed by filtering with a polyvinylidene fluoride membrane filter having the average pore diameter of 5.0 $\mu$m under the pressure, to thereby obtain a magenta ink.

The obtained black ink, the obtained magenta ink, the cyan ink of Example 16, and the yellow ink of Example 17 were combined to provide Ink Set 1.

<Production of Ink Set 2>

After blending 23.5 parts of propylene glycol serving as the water-soluble organic solvent (X), 8 parts of 1,2-butanediol serving as the water-soluble organic solvent (Y), 5 parts of glycerin serving as the water-soluble organic solvent (G), 1 part of 2-ethyl-1,3-hexanediol (boiling point: 243°C) serving as a penetrating agent, 2.5 parts of a surfactant, Zonyl FS-300 (manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 9.9 parts of pure water, the resulting mixture was stirred for 1 hour. Subsequently, 50 parts of Black Pigment Dispersion Liquid 1, and the resultant was stirred for 1 hour, followed by filtering with a polyvinylidene fluoride membrane filter having the average pore diameter of 5.0 $\mu$m under the pressure, to thereby obtain a black ink.

After blending 40 parts of propylene glycol serving as the water-soluble organic solvent (X), 3 parts of glycerin serving as the water-soluble organic solvent (G), 1 part of 2-ethyl-1,3-hexanediol (boiling point: 243°C) serving as a penetrating agent, 2.5 parts of a surfactant, Zonyl FS-300 (manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 3.4 parts of pure water, the resulting mixture was stirred for 1 hour. Subsequently, 50 parts of Magenta Pigment Dispersion Liquid 1, and the resultant was stirred for 1 hour, followed by filtering with a polyvinylidene fluoride membrane filter having the average pore diameter of 5.0 $\mu$m under the pressure, to thereby obtain a magenta ink.

The obtained black ink, the obtained magenta ink, the cyan ink of Example 18, and the yellow ink of Example 19 were combined to provide Ink Set 2.

<Production of Ink Set 3>

After blending 23.5 parts of propylene glycol serving as the water-soluble organic solvent (X), 1.2 parts of 2-methyl-2,4-pentanediol serving as the water-soluble organic solvent (Y), 9 parts of glycerin serving as the water-soluble organic solvent (G), 1 part of 2,2,4-trimethyl-pentanediol(boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 14.2 parts of pure water, the resulting mixture was stirred for 1 hour. Subsequently, 50 parts of Black Pigment Dispersion Liquid 1, and the resultant was stirred for 1 hour, followed by filtering with a polyvinylidene fluoride membrane filter having the average pore diameter of 5.0 $\mu$m under the pressure, to thereby obtain a black ink.

After blending 30 parts of propylene glycol serving as the water-soluble organic solvent (X), 7 parts of glycerin serving as the water-soluble organic solvent (G), 1 part of 2,2,4-trimethyl-pentanediol(boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 10.9 parts of pure water, the resulting mixture was stirred for 1 hour. Subsequently, 50 parts of Magenta Pigment Dispersion Liquid 2, and the resultant was stirred for 1 hour, followed by filtering with a polyvinylidene fluoride membrane filter having the average pore diameter of 5.0 $\mu$m under the pressure, to thereby obtain a magenta ink.

The obtained black ink, the obtained magenta ink, the cyan ink of Example 20, and the yellow ink of Example 21 were combined to provide Ink Set 3.

<Production of Ink Set 4>

After blending 19 parts of 2,3-butanediol serving as the water-soluble organic solvent (X), 11 parts of 1,2-butanediol serving as the water-soluble organic solvent (Y), 6 parts of glycerin serving as the water-soluble organic solvent (G), 1 part of 2-ethyl-1,3-hexanediol (boiling point: 232°C) serving as a penetrating agent, 1 part of a surfactant, SOFTANOL EP-7025 (manufactured by NIPPON SHOKUBAI CO., LTD.), 0.05 parts of an antifungal agent, Proxel GXL (manufactured by NITTO DENKO AVECIA INC.), 0.05 parts of a silicone antifoaming agent KM-72F (manufactured by Mitsui Chemicals, Inc.), and 11.9 parts of pure water, the resulting mixture was stirred for 1 hour. Subsequently, 50 parts of Black Pigment Dispersion Liquid 1, and the resultant was stirred for 1 hour, followed by filtering with a polyvinylidene fluoride membrane filter having the average pore diameter of 5.0 $\mu$m under the pressure, to thereby obtain a black ink.

After blending 23 parts of 2,3-butanediol serving as the water-soluble organic solvent (X), 10 parts of glycerin serving as the water-soluble organic solvent (G), 1 part of 2-ethyl-1,3-hexanediol (boiling point: 232°C) serving as a penetrating agent, 1 part of a surfactant, SOFTANOL EP-7025 (manufactured by NIPPON SHOKUBAI CO., LTD.), 0.05 parts of an antifungal agent Proxel GXL (manufactured by NITTO DENKO AVECIA INC.), 0.05 parts of a silicone antifoaming agent, KM-72F (manufactured by Mitsui Chemicals, Inc.), and 14.9 parts of pure water, the resulting mixture was stirred for 1 hour. Subsequently, 50 parts of Magenta Pigment Dispersion Liquid 3, and the resultant was stirred for 1 hour, followed by filtering with a polyvinylidene fluoride membrane filter having the average pore diameter of 5.0 $\mu$m under the pressure, to thereby obtain a magenta ink.

The obtained black ink, the obtained magenta ink, the cyan ink of Example 22, and the yellow ink of Example 23 were combined to provide Ink Set 4.

<Production of Ink Set 5>

After blending 25 parts of propylene glycol serving as the water-soluble organic solvent (X), 1 part of 1,2-butanediol serving as the water-soluble organic solvent (Y), 10 parts of glycerin serving as the water-soluble organic solvent (G), 1 part of 2,2,4-trimethyl-pentanediol (boiling point: 232°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent, KM-72F (manufactured by Mitsui Chemicals, Inc.), and 10.4 parts of pure water, the resulting mixture was stirred for 1 hour. Subsequently, 50 parts of Black Pigment Dispersion Liquid 1, and the resultant was stirred for 1 hour, followed by filtering with a polyvinylidene fluoride membrane filter having the average pore diameter of 5.0 $\mu$m under the pressure, to thereby obtain a black ink.

After blending 41 parts of propylene glycol serving as the water-soluble organic solvent (X), 3 parts of glycerin serving as the water-soluble organic solvent (G), 1 part of 2,2,4-trimethyl-pentanediol (boiling point: 232°C) serving as a penetrating agent, 2.5 parts of a surfactant, Zonyl FS-300(manufactured by Du Pont Kabushiki Kaisha), 0.05 parts of an antifungal agent, Proxel GXL (manufactured by NITTO DENKO AVECIA INC.), 0.05 parts of a silicone antifoaming agent KM-72F (manufactured by Mitsui Chemicals, Inc.), and 2.4 parts of pure water, the resulting mixture was stirred for 1 hour. Subsequently, 50 parts of Magenta Pigment Dispersion Liquid 1, and the resultant was stirred for 1 hour, followed by filtering with a polyvinylidene fluoride membrane filter having the average pore diameter of 5.0 $\mu$m under the pressure, to thereby obtain a magenta ink.

The obtained black ink, the obtained magenta ink, the cyan ink of Example 24, and the yellow ink of Example 25 were combined to provide Ink Set 5.

Subsequently, bleeding of Ink Sets 1 to 5 was evaluated.

<Bleeding>

After charging an inkjet printer, IPSIO GX5500 (manufactured by Ricoh Company Limited) with the ink set, LumiArt (manufactured by StoraEnso) was set in the printer. Charts created by Word2000 (of Microsoft), in each of which a 64 point letter "square" was formed, were arranged so that black, cyan, magenta, and yellow were provided next to each other, and were printed at the resolution of 600 dpi to thereby evaluate bleeding. Note that, "square" is a letter (symbol) where a square is filled with a solid color. A case where no bleeding was observed at boarders between black, cyan, magenta, and yellow was judged as I, a case where bleeding was slightly observed as judged as II, and a case where bleeding was clearly observed was judged as III.

The properties of Ink Sets 1 to 5, and the evaluation results of bleeding of Ink Sets 1 to 5 are presented in Table 3.

[Table 3]

| Ink Set | X' [mass%] | X'/Y' | Y' [mass%] | X"[mass%] | Bleeding |
|---|---|---|---|---|---|
| 1 | 20 | 2.0 | 10 | 24 | I |
| 2 | 23.5 | 2.9 | 8 | 40 | I |
| 3 | 23.5 | 19.6 | 1.2 | 30 | II |
| 4 | 19 | 1.7 | 11 | 23 | III |
| 5 | 25 | 25.0 | 1 | 41 | III |

It was found from Table 3 that occurrence of bleeding was prevented with Ink Sets 1 to 3.

On the other hand, bleeding occurred with Ink Set 4, as the amount of (X') was 19% by mass, the ratio X'/Y' was 1.7, and the amount of (X") was 23% by mass.

Bleeding occurred with Ink Set 5, as the amount of (X') was 25% by mass, the ratio X'/Y' was 25.0, and the amount (X") was 41% by mass.

Subsequently, the inkjet recording device (see Fig. 1) was charged with the ink or ink set, followed by printing on LumiArt (manufactured by StraEnso) at the resolution of 600 dpi, and printing speed of 80 m/min, with varying the surface temperature (80°C to 120°C) of the heat rollers 313, 314, and the temperature (80°C to 110°C) of the hot air generated by the hot-air generation device 315. Then, anti-blocking, and anti-smear fixability were evaluated.

<Anti-Blocking>

With reference to TAPPI T477 Test Method published by Japan Technical Association of the Pulp and Paper Industry, the solid image portion, which a square having a side of 6 cm, on the printed recording medium, and a recording medium, which had not been printed, were laminated on a glass plate in the shape of a square having a side of 10 cm. Thereafter, a glass plate in the shape of a square having a side of 10 cm was placed thereon, and a load of 1 kg/m$^2$ was applied thereon, and the resultant was left to stand for 24 hours in the environment of 40°C, 90%RH. After further leaving to stand for 2 hours at 25°C, a degree of bonding between the recording media was visually observed, when the recording medium was peeled from the other, to thereby evaluate anti-blocking. The result was judged based on the following standards.

Rank 5: Case where the surfaces of the recording media facing each other were not bonded or adhered, and they could be freely slid.

Rank 4: Case where the surfaces of the recording media facing each other were slightly bonded, and they could not be freely slid, but they could be slid as they were rubbed.

Rank 3: Case where the surfaces of the recording media facing each other were partially bonded, and they could not be slid even when they were rubbed, but they could be separated from each other.

Rank 2: Case where the surfaces of the recording media facing each other were bonded or adhered, and they could not be easily separated from each other.

Rank 1: Case where the surfaces of the recording media facing each other were completely bonded and fused, and they would break if it was attempt to separate the recording media.

<Anti-Smear Fixability>

As for an image chart, a solid image of a square having a side of 6 cm was printed at 100-duty, followed by leaving the resultant to stand for 1 hour. Subsequently, the printed solid image area was rubbed with a white cloth (manufactured by Toyo Seiki Kogyo Co., Ltd.) attached to a clock meter (manufactured by Toyo Seiki Kogyo Co., Ltd.) 10 times, and the ink stain on the white cloth was visually observed to evaluate anti-smear fixability. The result was judged based on the following standards.

Rank 5: Case where there was no stain.
Rank 4: Case where there was a slight stain, but it was not problem on practical use.
Rank 3: Case where there was a faint stain.
Rank 2: Case where a stain was slightly significant.
Rank 1: Case where a stain was significantly observed.

The evaluation results of the anti-blocking and anti-smear fixability of the yellow ink of Example 4 are presented in Table 4.

[Table 4]

| Surface temperature of heat roller [°C] | Temperature of hot air [°C] | Anti -blocking | Anti- smear fixability |
|---|---|---|---|
| 80 | 80 | 5 | 5 |
| 120 | 110 | 5 | 5 |
| 110 | 70 | 5 | 5 |
| 70 | 110 | 5 | 5 |

It was found from Table 4 that the yellow ink of Example 4 was excellent in anti-blocking and anti-smear fixability, when the heat rollers 313, 314, and the hot-air generation device 315 were used in combination.

The evaluation results of the anti-blocking and anti-smear fixability of the yellow ink of Example 7 are presented in Table 5.

[Table 5]

| Surface temperature of heat roller [°C] | Temperature of hot air [°C] | Anti-blocking | Anti-smear fixability |
|---|---|---|---|
| 80 | 80 | 5 | 5 |
| 120 | 110 | 5 | 5 |
| 110 | 70 | 5 | 5 |
| 70 | 110 | 5 | 5 |
| 120 | NA | 4 | 3 |
| NA | 110 | 3 | 4 |

It was found from Table 5 that the yellow ink of Example 7 was excellent in anti-blocking and anti-smear fixability, when the heat rollers 313, 314, and the hot-air generation device 315 were used in combination.

On the other hand, the anti-blocking and anti-smear fixability of the yellow ink of Example 7 were lowered, when the heat rollers 313, 314, or the hot-air generation device 315 was used.

The evaluation results of the anti-blocking and anti-smear fixability of the yellow ink of Example 8 are presented in Table 6.

[Table 6]

| Surface temperature of heat roller [°C] | Temperature of hot air [°C] | Anti-blocking | Anti-smear fixability |
|---|---|---|---|
| 80 | 80 | 4 | 5 |
| 120 | 110 | 5 | 5 |

(continued)

| Surface temperature of heat roller [°C] | Temperature of hot air [°C] | Anti-blocking | Anti-smear fixability |
|---|---|---|---|
| 110 | 70 | 5 | 4 |
| 70 | 110 | 4 | 4 |
| 120 | NA | 3 | 3 |
| NA | 110 | 3 | 3 |

It was found from Table 6 that the yellow ink of Example 8 was excellent in anti-blocking and anti-smear fixability, when the heat rollers 313, 314, and the hot-air generation device 315 were used in combination.

On the other hand, the anti-blocking and anti-smear fixability of the yellow ink of Example 8 were lowered, when the heat rollers 313, 314, or the hot-air generation device 315 was used.

The evaluation results of the anti-blocking and anti-smear fixability of the yellow ink of Example 9 are presented in Table 7.

[Table 7]

| Surface temperature of heat roller [°C] | Temperature of hot air [°C] | Anti-blocking | Anti-smear fixability |
|---|---|---|---|
| 80 | 80 | 4 | 5 |
| 120 | 110 | 5 | 5 |
| 110 | 70 | 5 | 4 |
| 70 | 110 | 4 | 4 |

It was found from Table 7 that the yellow ink of Example 9 was excellent in anti-blocking and anti-smear fixability, when the heat rollers 313, 314, and the hot-air generation device 315 were used in combination.

The evaluation results of the anti-blocking and anti-smear fixability of the cyan inks of Examples 2 and 12 are presented in Table 8.

[Table 8]

| | Surface temperature of heat roller [°C] | Temperature of hot air [°C] | Anti-blocking | Anti-smear fixability |
|---|---|---|---|---|
| Ex. 2 | 100 | 100 | 5 | 5 |
| Ex. 12 | 100 | 100 | 5 | 5 |

It was found from Table 8 that the cyan inks of Examples 2 and 12 were excellent in anti-blocking and anti-smear fixability, when the heat rollers 313, 314, and the hot-air generation device 315 were used in combination.

The evaluation results of the anti-blocking and anti-smear fixability of Ink Set 2 are presented in Table 9.

[Table 9]

| Surface temperature of heat roller [°C] | Temperature of hot air [°C] | Anti-blocking | Anti-smear fixability |
|---|---|---|---|
| 120 | 110 | 5 | 5 |

It was found from Table 9 that Ink set 2 was excellent in anti-blocking and anti-smear fixability, when the heat rollers 313, 314, and the hot-air generation device 315 were used in combination.

For example, the embodiments of the present invention are as follows:

<1> An ink, containing:

water;
a pigment; and
a first water-soluble organic solvent,
wherein the first water-soluble organic solvent contains a water-soluble organic solvent (G) having a boiling point of 280°C to 300°C, a water-soluble organic solvent (X) having a boiling point of 180°C to 190°C, and a water-soluble organic solvent (Y) having a boiling point of 190°C to 200°C,
wherein the ink satisfies the following formulae:

$$24 \leqq X \leqq 40$$

$$2 \leqq X/Y \leqq 20$$

where X [% by mass] is an amount of the water-soluble organic solvent (X), and Y [% by mass] is an amount of the water-soluble organic solvent (Y).

<2> The ink according to <1>, wherein the ink satisfies the following formula:

$$2 \leqq G \leqq 6$$

where G [% by mass] is an amount of the water-soluble organic solvent (G).
<3> The ink according to <1> or <2>, wherein the ink satisfies the following formula:

$$2 \leqq Y \leqq 10.$$

<4> The ink according to any one of <1> to <3>, wherein the ink satisfies the following formula:

$$30 \leqq X+Y \leqq 42.$$

<5> The ink according to any one of <1> to <4>, wherein the water-soluble organic solvent (G) is glycerin.
<6> The ink according to any one of <1> to <5>, wherein the water-soluble organic solvent (X) is 2,3-butanediol, propylene glycol, diethylene glycol diethyl ether, or any combination thereof.
<7> The ink according to any one of <1> to <6>, wherein water-soluble organic solvent (Y) is 1,2-butanediol, diethylene glycol monomethyl ether, 2-methyl-2,4-pentanediol, or any combination thereof.
<8> The ink according to any one of <1> to <7>, wherein the ink is free from a water-dispersible resin.
<9> The ink according to any one of <1> to <8>, wherein the ink is a cyan ink, or a yellow ink.
<10> An ink set, containing:

the ink according to <9>; and
a black ink,
wherein the black ink contains water, a pigment, and a second water-soluble organic solvent,
wherein the second water-soluble organic solvent contains the water-soluble organic solvent (G), the water-soluble organic solvent (X), and the water-soluble organic solvent (Y), and
wherein the black ink satisfies the following formulae:

$$20 \leqq X' < 24$$

$$2 \leqq X'/Y' \leqq 20$$

where X' [% by mass] is an amount of the water-soluble organic solvent (X) in the black ink, and Y' [% by mass] is an amount of the water-soluble organic solvent (Y) in the black ink.

<11> An ink set, comprising:

the ink according to <9>; and

a magenta ink,
wherein the magenta ink contains water, a pigment, and a third water-soluble organic solvent,
wherein the third water-soluble organic solvent contains the water-soluble organic solvent (G), and the water-soluble organic solvent (X), but free from the water-soluble organic solvent (Y), and
wherein the magenta ink satisfies the following formula:

$$24 \leqq X'' \leqq 40$$

where X" [% by mass] is an amount of the water-soluble organic solvent (X) in the magenta ink.

<12> An ink cartridge, containing:

the ink according to any one of <1> to <9>; and
a container housing the ink therein.

<13> An inkjet recording device, containing:
an ink ejection unit configured to eject the ink according to any one of <1> to <9> to form an ink image on a recording medium.
<14> The inkjet recording device according to <13>, further containing a first heating unit and a second heating unit, which are configured to heat the recording medium, on which the ink image is formed,
wherein the second heating unit is configured to generate hot air.
<15> The inkjet recording device according to <14>, wherein a temperature at which the first heating unit heats the recording medium is 80°C to 140°C.
<16> The inkjet recording device according to <14> or <15>, wherein a temperature of the hot air, which the second heating unit generates, is 80°C to 130°C.

**Reference Signs List**

M: recording medium
300: inkjet recording device
304: ink ejection unit
304K, 304C, 304M, 304Y: inkjet head
306: second drying unit
313, 314: heat roller
315: hot-air generation device

**Claims**

1. An ink, comprising:

water;
a pigment; and
a first water-soluble organic solvent,
wherein the first water-soluble organic solvent contains a water-soluble organic solvent (G) having a boiling point of 280°C to 300°C, a water-soluble organic solvent (X) having a boiling point of 180°C to 190°C, and a water-soluble organic solvent (Y) having a boiling point of 190°C to 200°C,
wherein the ink satisfies the following formulae:

$$24 \leqq X \leqq 40$$

$$2 \leqq X/Y \leqq 20$$

where X [% by mass] is an amount of the water-soluble organic solvent (X), and Y [% by mass] is an amount of the water-soluble organic solvent (Y).

2. The ink according to claim 1, wherein the ink satisfies the following formula:

$$2 \leqq G \leqq 6$$

where G [% by mass] is an amount of the water-soluble organic solvent (G).

3. The ink according to claim 1 or 2, wherein the ink satisfies the following formula:

$$2 \leqq Y \leqq 10.$$

4. The ink according to any one of claims 1 to 3, wherein the ink satisfies the following formula:

$$30 \leqq X+Y \leqq 42.$$

5. The ink according to any one of claims 1 to 4, wherein the water-soluble organic solvent (G) is glycerin.

6. The ink according to any one of claims 1 to 5, wherein the water-soluble organic solvent (X) is 2,3-butanediol, propylene glycol, diethylene glycol diethyl ether, or any combination thereof.

7. The ink according to any one of claims 1 to 6, wherein the water-soluble organic solvent (Y) is 1,2-butanediol, diethylene glycol monomethyl ether, 2-methyl-2,4-pentanediol, or any combination thereof.

8. The ink according to any one of claims 1 to 7, wherein the ink is free from a water-dispersible resin.

9. The ink according to any one of claims 1 to 8, wherein the ink is a cyan ink, or a yellow ink.

10. An ink set, comprising:

the ink according to claim 9; and
a black ink,
wherein the black ink contains water, a pigment, and a second water-soluble organic solvent,
wherein the second water-soluble organic solvent contains the water-soluble organic solvent (G), the water-soluble organic solvent (X), and the water-soluble organic solvent (Y), and
wherein the black ink satisfies the following formulae:

$$20 \leqq X' < 24$$

$$2 \leqq X'/Y' \leqq 20$$

where X' [% by mass] is an amount of the water-soluble organic solvent (X) in the black ink, and Y' [% by mass] is an amount of the water-soluble organic solvent (Y) in the black ink.

11. An ink set, comprising:

the ink according to claim 9; and
a magenta ink,
wherein the magenta ink contains water, a pigment, and a third water-soluble organic solvent,
wherein the third water-soluble organic solvent contains the water-soluble organic solvent (G), and the water-soluble organic solvent (X), but free from the water-soluble organic solvent (Y), and

wherein the magenta ink satisfies the following formula:

$$24 \leq X'' \leq 40$$

where X" [% by mass] is an amount of the water-soluble organic solvent (X) in the magenta ink.

12. An ink cartridge, comprising:

the ink according to any one of claims 1 to 9; and
a container housing the ink therein.

13. An inkjet recording device (300), comprising:
an ink ejection unit (304) comprising the ink according to any one of claims 1 to 9 and configured to eject said ink to form an ink image on a recording medium (M).

14. The inkjet recording device (300) according to claim 13, further comprising a first heating unit and a second heating unit, which are configured to heat the recording medium (M), on which the ink image is formed,
wherein the second heating unit is configured to generate hot air.

15. The inkjet recording device (300) according to claim 14, wherein a temperature at which the first heating unit heats the recording medium is 80°C to 140°C, and wherein a temperature of the hot air, which the second heating unit generates, is 80°C to 130°C.

**Patentansprüche**

1. Tinte, umfassend:

Wasser;
ein Pigment; und
ein erstes wasserlösliches organisches Lösungsmittel,
wobei das erste wasserlösliche organische Lösungsmittel ein wasserlösliches organisches Lösungsmittel (G), das einen Siedepunkt von 280 °C bis 300 °C hat, ein wasserlösliches organisches Lösungsmittel (X), das einen Siedepunkt von 180 °C bis 190 °C hat, und ein wasserlösliches organisches Lösungsmittel (Y) enthält, das einen Siedepunkt von 190 °C bis 200 °C hat,
wobei die Tinte die folgenden Formeln erfüllt:

$$24 \leq X \leq 40$$

$$2 \leq X/Y \leq 20$$

wobei X [Massen-%] eine Menge des wasserlöslichen organischen Lösungsmittels (X) ist und Y [Massen-%] eine Menge des wasserlöslichen organischen Lösungsmittels (Y) ist.

2. Tinte nach Anspruch 1, wobei die Tinte die folgende Formel erfüllt:

$$2 \leq G \leq 6$$

wobei G [Massen-%] eine Menge des wasserlöslichen organischen Lösungsmittels (G) ist.

3. Tinte nach Anspruch 1 oder 2, wobei die Tinte die folgende Formel erfüllt:

$$2 \leq Y \leq 10.$$

4. Tinte nach einem der Ansprüche 1 bis 3, wobei die Tinte die folgende Formel erfüllt:

$$30 \leq X+Y \leq 42.$$

5. Tinte nach einem der Ansprüche 1 bis 4, wobei das wasserlösliche organische Lösungsmittel (G) Glycerin ist.

6. Tinte nach einem der Ansprüche 1 bis 5, wobei das wasserlösliche organische Lösungsmittel (X) 2,3-Butandiol, Propylenglycol, Diethylenglycoldiethylether oder eine Kombination davon ist.

7. Tinte nach einem der Ansprüche 1 bis 6, wobei das wasserlösliche organische Lösungsmittel (Y) 1,2-Butandiol, Diethylenglycolmonomethylether, 2-Methyl-2,4-pentandiol oder eine beliebige Kombination davon ist.

8. Tinte nach einem der Ansprüche 1 bis 7, wobei die Tinte frei von einem wasserdispergierbaren Harz ist.

9. Tinte nach einem der Ansprüche 1 bis 8, wobei die Tinte eine cyanfarbene Tinte oder eine gelbe Tinte ist.

10. Tintensatz, umfassend:

die Tinte nach Anspruch 9; und
eine schwarze Tinte,
wobei die schwarze Tinte Wasser, ein Pigment und ein zweites wasserlösliches organisches Lösungsmittel enthält,
wobei das zweite wasserlösliche organische Lösungsmittel das wasserlösliche organische Lösungsmittel (G), das wasserlösliche organische Lösungsmittel (X) und das wasserlösliche organische Lösungsmittel (Y) enthält und
wobei die schwarze Tinte die folgenden Formeln erfüllt:

$$20 \leq X' < 24$$

$$2 \leq X'/Y' \leq 20$$

wobei X' [Massen-%] eine Menge des wasserlöslichen organischen Lösungsmittels (X) in der schwarzen Tinte ist und Y' [Massen-%] eine Menge des wasserlöslichen organischen Lösungsmittels (Y) in der schwarzen Tinte ist.

11. Tintensatz, umfassend:

die Tinte nach Anspruch 9; und
eine magentafarbene Tinte,
wobei die magentafarbene Tinte Wasser, ein Pigment und ein drittes wasserlösliches organisches Lösungsmittel enthält,
wobei das dritte wasserlösliche organische Lösungsmittel das wasserlösliche organische Lösungsmittel (G) und das wasserlösliche organische Lösungsmittel (X) enthält, aber frei von dem wasserlöslichen organischen Lösungsmittel (Y) ist, und
wobei die magentafarbene Tinte die folgende Formel erfüllt:

$$24 \leq X'' \leq 40$$

wobei X'' [Massen-%] eine Menge des wasserlöslichen organischen Lösungsmittels (X) in der magentafarbenen Tinte ist.

**12.** Tintenpatrone, umfassend:

> die Tinte nach einem der Ansprüche 1 bis 9; und
> einen Behälter, der die Tinte darin aufnimmt.

**13.** Tintenstrahlaufzeichnungsvorrichtung (300), umfassend:
eine Tintenausstoßeinheit (304), die die Tinte nach einem der Ansprüche 1 bis 9 umfasst und konfiguriert ist, um die Tinte auszustoßen, um ein Tintenbild auf einem Aufzeichnungsmedium (M) zu bilden.

**14.** Tintenstrahlaufzeichnungsvorrichtung (300) nach Anspruch 13, ferner umfassend eine erste Heizeinheit und eine zweite Heizeinheit, die konfiguriert sind, um das Aufzeichnungsmedium (M) zu erhitzen, auf dem das Tintenbild gebildet wird,
wobei die zweite Heizeinheit konfiguriert ist, um heiße Luft zu erzeugen.

**15.** Tintenstrahlaufzeichnungsvorrichtung (300) nach Anspruch 14, wobei eine Temperatur, bei der die erste Heizeinheit das Aufzeichnungsmedium erhitzt, 80 °C bis 140 °C beträgt, und wobei eine Temperatur der heißen Luft, die die zweite Heizeinheit erzeugt, 80 °C bis 130 °C beträgt.

**Revendications**

**1.** Encre, comprenant :

> de l'eau ;
> un pigment ; et
> un premier solvant organique soluble à l'eau ;
> dans laquelle le premier solvant organique soluble à l'eau contient un solvant organique soluble à l'eau (G) qui présente un point d'ébullition de 280 °C à 300 °C, un solvant organique soluble à l'eau (X) qui présente un point d'ébullition de 180 °C à 190 °C et un solvant organique soluble à l'eau (Y) qui présente un point d'ébullition de 190 °C à 200 °C ;
> dans laquelle l'encre satisfait les formules qui suivent :

$$24 \leq X \leq 40$$

$$2 \leq X/Y \leq 20$$

> dans lesquelles X [% en masse] est une quantité du solvant organique soluble à l'eau (X) et Y [% en masse] est une quantité du solvant organique soluble à l'eau (Y).

**2.** Encre selon la revendication 1, dans laquelle l'encre satisfait la formule qui suit :

$$2 \leq G \leq 6$$

> dans laquelle G [% en masse] est une quantité du solvant organique soluble à l'eau (G).

**3.** Encre selon la revendication 1 ou 2, dans laquelle l'encre satisfait la formule qui suit :

$$2 \leq Y \leq 10.$$

**4.** Encre selon l'une quelconque des revendications 1 à 3, dans laquelle l'encre satisfait la formule qui suit :

$$30 \leq X + Y \leq 42.$$

**5.** Encre selon l'une quelconque des revendications 1 à 4, dans laquelle le solvant organique soluble à l'eau (G) est de la glycérine.

**6.** Encre selon l'une quelconque des revendications 1 à 5, dans laquelle le solvant organique soluble à l'eau (X) est du 2,3-butanediol, du propylène glycol, du diéthylène glycol diéthyléther ou une quelconque combinaison de ceux-ci.

**7.** Encre selon l'une quelconque des revendications 1 à 6, dans laquelle le solvant organique soluble à l'eau (Y) est du 1,2-butanediol, du diéthylène glycol monométhyléther, du 2-méthyl-2,4-pentanediol ou une quelconque combinaison de ceux-ci.

**8.** Encre selon l'une quelconque des revendications 1 à 7, dans laquelle l'encre est exempte de résine dispersible à l'eau.

**9.** Encre selon l'une quelconque des revendications 1 à 8, dans laquelle l'encre est une encre cyan ou une encre jaune.

**10.** Jeu d'encres, comprenant :

l'encre selon la revendication 9 ; et
une encre noire ;
dans lequel l'encre noire contient de l'eau, un pigment et un deuxième solvant organique soluble à l'eau ;
dans lequel le deuxième solvant organique soluble à l'eau contient le solvant organique soluble à l'eau (G), le solvant organique soluble à l'eau (X) et le solvant organique soluble à l'eau (Y) ; et
dans lequel l'encre noire satisfait les formules qui suivent :

$$20 \leq X' < 24$$

$$2 \leq X'/Y' \leq 20$$

dans lesquelles X' [% en masse] est une quantité du solvant organique soluble à l'eau (X) dans l'encre noire et Y' [% en masse] est une quantité du solvant organique soluble à l'eau (Y) dans l'encre noire.

**11.** Jeu d'encres, comprenant :

l'encre selon la revendication 9 ; et
une encre magenta ;
dans lequel l'encre magenta contient de l'eau, un pigment et un troisième solvant organique soluble à l'eau ;
dans lequel le troisième solvant organique soluble à l'eau contient le solvant organique soluble à l'eau (G) et le solvant organique soluble à l'eau (X) mais est exempt du solvant organique soluble à l'eau (Y) ; et
dans lequel l'encre magenta satisfait la formule qui suit :

$$24 \leq X'' \leq 40$$

dans laquelle X'' [% en masse] est une quantité du solvant organique soluble à l'eau (X) dans l'encre magenta.

**12.** Cartouche d'encre, comprenant :

l'encre selon l'une quelconque des revendications 1 à 9 ; et
un conteneur qui loge l'encre en son sein.

**13.** Dispositif d'enregistrement à jet d'encre (300), comprenant :
une unité d'éjection d'encre (304) qui comprend l'encre selon l'une quelconque des revendications 1 à 9 et qui est configurée de manière à ce qu'elle éjecte ladite encre afin de former une image d'encre sur un support d'enregistrement (M).

**14.** Dispositif d'enregistrement à jet d'encre (300) selon la revendication 13, comprenant en outre une première unité de chauffage et une seconde unité de chauffage, lesquelles sont configurées de manière à ce qu'elles chauffent le support d'enregistrement (M) sur lequel l'image d'encre est formée ;
dans lequel la seconde unité de chauffage est configurée de manière à ce qu'elle génère de l'air chaud.

15. Dispositif d'enregistrement à jet d'encre (300) selon la revendication 14, dans lequel une température à laquelle la première unité de chauffage chauffe le support d'enregistrement va de 80 °C à 140 °C, et dans lequel une température de l'air chaud, que la seconde unité de chauffage génère, va de 80 °C à 130 °C.

[Fig. 1]

[Fig. 2]

[Fig. 3]

Conveying direction

[Fig. 4]

304K-1

N                    S

**EP 3 191 556 B1**

## REFERENCES CITED IN THE DESCRIPTION

**Patent documents cited in the description**

- JP 2010042544 A